# EUROPEAN PATENT APPLICATION

(11) **EP 4 601 356 A1**
(43) Date of publication of application: **13.08.2025**
(21) Application number: 23886142.1
(22) Date of filing: 27.10.2023
(51) Int. Cl.: H04W 28/02, H04W 72/21, H04W 72/56

(54) **METHOD AND APPARATUS FOR BUFFER STATUS REPORT IN WIRELESS COMMUNICATION SYSTEM**

(30) Priority: 03.11.2022 KR 20220145206; 15.09.2023 KR 20230122964
(71) Applicant: Samsung Electronics Co., Ltd., Suwon-si, Gyeonggi-do 16677 (KR)
(72) Inventor: SUN, Weiping, Suwon-si Gyeonggi-do 16677 (KR); BAEK, Sangkyu, Suwon-si Gyeonggi-do 16677 (KR); AGIWAL, Anil, Suwon-si Gyeonggi-do 16677 (KR); KANG, Hyunjeong, Suwon-si Gyeonggi-do 16677 (KR); LEE, Taeseop, Suwon-si Gyeonggi-do 16677 (KR)
(74) Representative: Nederlandsch Octrooibureau
(86) International application number: PCT/KR2023/016814
(87) International publication number: WO 2024/096446

(57) **Abstract**

The present disclosure relates to a 5G or 6G communication system for supporting higher data transmission rates. The present disclosure provides a method for providing a BSR of a terminal, comprising the steps of: receiving, from a base station, a radio resource control (RRC) reconfiguration message including information on a buffer size table type to which each LCG can refer; identifying whether a BSR is triggered; generating, in response to triggering of the BSR, a BSR media access control control element (MAC CE), on the basis of the RRC reconfiguration message; and transmitting the BSR MAC CE to the base station.

## Description

### [Technical Field]

The disclosure relates to a communication field and relates to operations of a terminal and a base station. In particular, the disclosure relates to a buffer status report (BSR) method of a terminal, a BSR acquisition method of a base station, and a terminal, base station, and communication system related thereto.

### [Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

Embodiments set forth herein are to provide a device and a method capable of effectively providing services in a wireless communication system.

### [Solution to Problem]

According to an embodiment of the disclosure, a method for providing a buffer status report (BSR) by a terminal in a wireless communication system may include: receiving, from a base station, a radio resource control (RRC) reconfiguration message including information on a buffer size table type that each logical channel group (LCG) can refer to; identifying whether a BSR is triggered; in response to triggering of the BSR, generating a BSR media access control (MAC) control element (CE), based on the RRC reconfiguration message; and transmitting the BSR MAC CE to the base station, wherein the BSR MAC CE includes information indicating the buffer size table type that the each LCG refers to.

The buffer size table type may include a first type buffer size table and a second type buffer size table, and the first type buffer size table and the second type buffer size table may differ from each other in at least one of a maximum value or a minimum value indicating an amount of data in a buffer, or an interval indicating an amount of data corresponding to each index.

The buffer size table type referred to by the each LCG may be determined based on a buffer size of the each LCG.

The method may further include: receiving, from the base station, a UECapabilityEnquiry message inquiring of whether the terminal has capability to use the first type buffer size table; and transmitting, to the base station, a UECapabilityInformattion message including information on whether the terminal has capability use the first type buffer size table.

The information indicating the buffer size table type may be included in an LCG identification (ID) field or a buffer size table type field in the BSR MAC CE.

According to an embodiment of the disclosure, a method for acquiring a buffer status report (BSR) by a base station in a wireless communication system may include: transmitting, to a terminal, a radio resource control (RRC) reconfiguration message including information on a buffer size table type that each logical channel group (LCG) can refer to; and receiving, from the terminal, a BSR media access control (MAC) control element (CE) based on the RRC reconfiguration message, wherein the BSR MAC CE includes information indicating the buffer size table type that the each LCG refers to.

The buffer size table type may include a first type buffer size table and a second type buffer size table, and the first type buffer size table and the second type buffer size table may differ from each other in at least one of a maximum value or a minimum value indicating an amount of data in a buffer, or an interval indicating an amount of data corresponding to each index.

The buffer size table type referred to by the each LCG may be determined based on a buffer size of the each LCG.

According to an embodiment of the disclosure, a terminal for providing a buffer status report (BSR) may include a transceiver, and at least one processor coupled with the transceiver, wherein the at least one processor is configured to: receive, from a base station, a radio resource control (RRC) reconfiguration message including information on a buffer size table type that each logical channel group (LCG) can refer to; identify whether a BSR is triggered; in response to triggering of the BSR, generate a BSR media access control (MAC) control element (CE), based on the RRC reconfiguration message; and transmit the BSR MAC CE to the base station, wherein the BSR MAC CE includes information indicating the buffer size table type that the each LCG refers to.

The buffer size table type may include a first type buffer size table and a second type buffer size table, and the first type buffer size table and the second type buffer size table may differ from each other in at least one of a maximum value or a minimum value indicating an amount of data in a buffer, or an interval indicating an amount of data corresponding to each index.

The buffer size table type referred to by the each LCG may be determined based on a buffer size of the each LCG.

The at least one processor may be configured to: receive, from the base station, a UECapabilityEnquiry message inquiring of whether the terminal has capability to use the first type buffer size table; and transmit, to the base station, a UECapabilityInformattion message including information on whether the terminal capability to use the first type buffer size table.

The information indicating the buffer size table type may be included in an LCG identification (ID) field or a buffer size table type field in the BSR MAC CE.

According to an embodiment of the disclosure, a base station for acquiring a buffer status report (BSR) may include a transceiver, and at least one processor coupled with the transceiver, wherein the at least one processor is configured to: transmit, to a terminal, a radio resource control (RRC) reconfiguration message including information on a buffer size table type that each logical channel group (LCG) can refer to; and receive, from the terminal, a BSR media access control (MAC) control element (CE) based on the RRC reconfiguration message, wherein the BSR MAC CE includes information indicating the buffer size table type that the each LCG refers to.

The buffer size table type may include a first type buffer size table and a second type buffer size table, and the first type buffer size table and the second type buffer size table may differ from each other in at least one of a maximum value or a minimum value indicating an amount of data in a buffer, or an interval indicating an amount of data corresponding to each index.

The technical subjects pursued in the disclosure may not be limited to the above-mentioned technical subjects, and other technical subjects which are not mentioned may be clearly understood from the following descriptions by those skilled in the art to which the disclosure pertains.

The technical subjects pursued in the disclosure may not be limited to the above-mentioned technical subjects, and other technical subjects which are not mentioned may be clearly understood from the following descriptions by those skilled in the art to which the disclosure pertains.

### [Advantageous Effects of Invention]

The disclosure provides a device and a method capable of effectively providing services in a wireless communication system.

### [Brief Description of Drawings]

FIG. 1 is a diagram illustrating a structure of an NR system according to an embodiment of the disclosure.
FIG. 2 is a diagram illustrating a radio protocol structure in the NR system according to an embodiment of the disclosure.
FIG. 3 is a diagram illustrating a method of determining a buffer status report format by a UE in the NR system according to an embodiment of the disclosure.
FIG. 4 is a diagram illustrating a short BSR/short truncated BSR MAC CE format of the NR system according to an embodiment of the disclosure.
FIG. 5 is a diagram illustrating a long BSR/long truncated BSR MAC CE format of the NR system according to an embodiment of the disclosure.
FIG. 6 is a diagram illustrating a short BSR buffer size report table of the NR system according to an embodiment of the disclosure.
FIG. 7 is a diagram illustrating a MAC subheader format of the NR system according to an embodiment of the disclosure.
FIG. 8 is a diagram illustrating an NBT according to an embodiment of the disclosure.
FIG. 9 is a diagram illustrating an NBT according to an embodiment of the disclosure.
FIG. 10 is a diagram illustrating a procedure in which a base station and a UE configure whether the UE supports an NBT and an NBT-related configuration via RRC signaling according to an embodiment of the disclosure.
FIG. 11 is a diagram illustrating a procedure in which a UE reports a preferred NBT or traffic characteristics to a base station via UAI, and a procedure in which the base station configures an NBT-related configuration for the UE, according to an embodiment of the disclosure.
FIG. 12 is a diagram illustrating an NBT short BSR MAC CE according to an embodiment of the disclosure.
FIG. 13 is a diagram illustrating an NBT short BSR MAC CE, according to an embodiment of the disclosure.
FIG. 14 is a diagram illustrating an NBT short BSR MAC CE according to an embodiment of the disclosure.
FIG. 15 is a diagram illustrating an NBT long BSR MAC CE according to an embodiment of the disclosure.
FIG. 16 is a diagram illustrating an NBT long BSR MAC CE according to an embodiment of the disclosure.
FIG. 17 is a diagram illustrating an NBT long BSR MAC CE according to an embodiment of the disclosure.
FIG. 18 is a diagram illustrating an NBT long BSR MAC CE according to an embodiment of the disclosure.
FIG. 19 is a diagram illustrating an NBT MAC CE according to an embodiment of the disclosure.
FIG. 20 is a diagram illustrating a method of assigning a new LCID codepoint to an NBT short BSR, an NBT long BSR, and an NBT MAC CE according to an embodiment of the disclosure.
FIG. 21 is a diagram illustrating a method of assigning a new eLCID codepoint to an NBT short BSR, an NBT long BSR, and an NBT MAC CE according to an embodiment of the disclosure.
FIG. 22 is a diagram illustrating an NBT long/short BSR applying method according to an embodiment of the disclosure.
FIG. 23 illustrates a UE device according to an embodiment of the disclosure.
FIG. 24 illustrates a base station device according to an embodiment of the disclosure.

### [Mode for the Invention]

Hereinafter, exemplary embodiments of the disclosure will be described in detail with reference to the accompanying drawings. It should be noted that, in the accompanying drawings, the same or like elements are designated by the same or like reference signs as much as possible. In addition, a detailed description of known functions or configurations that may make the subject matter of the disclosure unclear will be omitted.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

In the following description, a base station is an entity that allocates resources to terminals, and may be at least one of a Node B, a base station (BS), an eNode B (eNB), a gNode B (gNB), a wireless access unit, a base station controller, and a node on a network. A terminal may include a user equipment (UE), a mobile station (MS), a cellular phone, a smartphone, a computer, or a multimedia system capable of performing a communication function. Furthermore, the embodiments of the disclosure as described below may also be applied to other communication systems having similar technical backgrounds or channel types to the embodiments of the disclosure. In addition, based on determinations by those skilled in the art, the embodiments of the disclosure may be applied to other communication systems through some modifications without significantly departing from the scope of the disclosure. Examples of such communication systems may include 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may be applied to other communication systems through some modifications without significantly departing from the scope of the disclosure.

In the following description, terms for identifying access nodes, terms referring to network entities or network functions (NFs), terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, some of terms and names defined in the 3rd generation partnership project (3GPP) long term evolution (LTE) standards and/or 3GPP new radio (NR) standards may be used for the sake of descriptive convenience. However, the disclosure is not limited by these terms and names, and may be applied in the same way to systems that conform other standards.

In a next-generation/5G (new radio (NR)) wireless communication system, in order to assist a base station to schedule resources more efficiently, a UE needs to report a buffer status to the base station. A buffer status report (BSR) expresses an amount of data stored in a buffer of the UE and is used for reporting. According to NR specifications, the UE selects an index of an interval including a buffer data amount to be reported among the range of data amounts by interval defined by index in a buffer size table, and adds the selected index to the BSR.

However, the buffer size table defined in the prior art is designed so that, as an index value increases, a larger amount of data is expressed using a longer interval. As an amount of data stored in a buffer of a UE increases, a larger index value needs to be transmitted, which corresponds to a data amount of a longer interval, so that it becomes difficult for a base station to estimate an exact amount of data in a corresponding interval, which leads to difficulties in efficient scheduling.

Therefore, in the disclosure, a new buffer size table (hereinafter, referred to as a new buffer size (BS) table (NBT)) is introduced, and a method in which a UE reports a buffer size by referring to a NBT, thereby reporting a more detailed buffer size is proposed.

Buffer status reporting in the NR system may be performed based on medium access control (MAC) layer signaling between a UE and a base station. That is, when a buffer status report (BSR) is triggered at a specific transmission time point, the UE may include a MAC control element (MAC CE) in a MAC PDU and transmit the MAC PDU to the base station. In this case, the BSR control element indicates, in units of logical channel groups (hereinafter, referred to as LCGs), a quantity of packets remaining in a transmission buffer of the UE after the MAC PDU is configured. The base station may estimate an amount of data currently remaining in the buffer of the UE by using the BSR received from the UE. In the NR system, the UE may manage, by eight LCGs, a transmission buffer for data to be transmitted to the base station.

In the disclosure, in order to transfer an amount of data stored in a transmission buffer of a UE to a base station in more detail, an NBT is introduced, and a method in which a UE reports a buffer size to a base station by referring to the NBT is proposed.

An objective of the disclosure is to propose a method for improving communication performance between a UE and a base station. In addition, an objective of the disclosure is to propose a BSR reporting method of a UE and a BSR acquisition method of a base station.

According to various embodiments of the disclosure, a method for improving communication performance between a UE and a base station may be provided. In addition, according to various embodiments of the disclosure, a BSR reporting method of a UE and a BSR acquisition method of a base station may be provided.

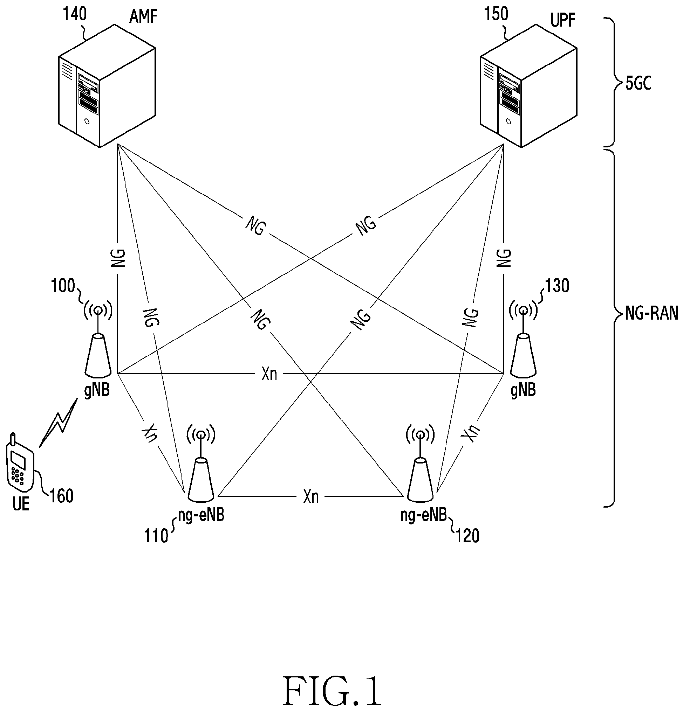

FIG. 1 is a diagram illustrating a structure of an NR system according to an embodiment of the disclosure.

Referring to FIG. 1, a wireless communication system may include multiple base stations (e.g., a gNB 100, an ng-eNB 110, an ng-eNB 120, and a gNB 130), an access and mobility management function (AMF) 140, and a user plane function (UPF) 150. Of course, the wireless communication system is not limited to the configuration illustrated in FIG. 1, and may include more or fewer components.

According to an embodiment of the disclosure, a user terminal (a user equipment, hereinafter, a UE or a terminal) 160 may access an external network via the base stations 100, 110, 120, and 130 and the UPF 150.

In FIG. 1, the base stations 100, 110, 120, and 130 are access nodes of a cellular network, and may provide radio access to UEs accessing the network. That is, in order to service traffic of users, the base stations 100, 110, 120, and 130 may collect state information, such as buffer states, available transmission power states, and channel states of UEs, and perform scheduling so as to support connections between the UEs and a core network (CN, in particular, CN of NR is referred to as 5GC).

In FIG. 1, the gNBs 1a-05 and 1a-20 may control multiple cells, and an adaptive modulation & coding (hereinafter, referred to as AMC) scheme for determining a channel coding rate and a modulation scheme according to a channel state of the UE may be applied.

The core network is a device in charge of various control functions as well as a mobility management function for a UE, and may be connected to multiple base stations. In addition, 5GC may also be linked with existing LTE systems.

In a wireless communication system, a user plane (UP) related to actual user data transmission and a control plane (CP), such as connection management, may be separately configured, the gNB 100 and the gNB 130 in FIG. 1 may use UP and CP technologies defined in NR technology, and although the ng-eNB 110 and the ng-eNB 120 are connected to 5GC, the ng-eNB 110 and the ng-eNB 120 may use UP and CP technologies defined in long-term evolution (LTE) technology.

The AMF 140 is a device in charge of various control functions as well as mobility management functions for the UEs and is connected to the multiple base stations, and the UPF 150 may refer to a type of gateway device that provides data transmission. Although not illustrated in FIG. 1, the NR wireless communication system may include a session management function (SMF). The SMF may manage a packet data network connection, such as a protocol data unit (PDU) session provided to a UE.

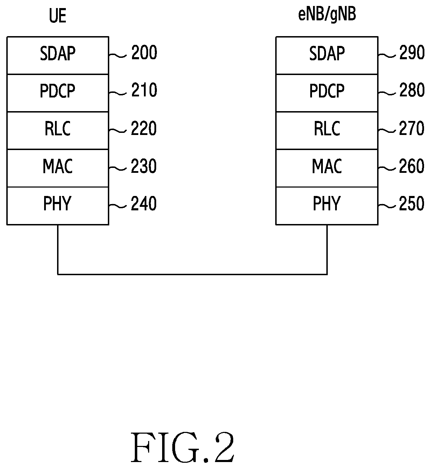

FIG. 2 is a diagram illustrating a radio protocol structure in the NR/LTE system according to an embodiment of the disclosure.

Referring to FIG. 2, radio protocols of the NR system may include service data adaptation protocols (SDAPs) 200 and 290, packet data convergence protocols (PDCPs) 210 and 280, radio link controls (RLCs) 220 and 270, and medium access controls (MACs)230 and 260 in both a UE and a base station, respectively.

The service data adaptation protocols (SDAPs)200 and 290 may perform operations for transferring user data, mapping a QoS flow to a specific DRB for uplink and downlink, marking a QoS flow ID for uplink and downlink, and mapping a reflective QoS flow to a data bearer for uplink SDAP PDUs. An SDAP configuration corresponding to each DRB may be provided from a higher RRC layer. Of course, the disclosure is not limited to the example above.

The packet data convergence protocol (PDCP) 210 and 280 may be responsible for Internet protocol (IP) header compression/decompression operations. In addition, the PDCPs 210 and 280 may provide in-sequence and out-of-sequence transfer functions, perform reordering, and provide duplicate detection and retransmission functions, and encryption and decryption functions. Of course, the disclosure is not limited to the example above.

The radio link controls (hereinafter, referred to as RLC) 220 and 270 may reconfigure a packet data unit (PDCP PDU) to an appropriate size. In addition, the RLCs 220 and 270 may provide in-sequence and out-of-sequence transfer functions, an ARQ function, a concatenation function, a segmentation function, a reassembly function, a re-segmentation function, a reordering function, a duplication detection function, and an error detection function. Of course, the disclosure is not limited to the example above.

The MACs 230 and 260 are connected to multiple RLC layer devices included in one UE, and may perform multiplexing of RLC PDUs on an MAC PDU and demultiplexing of the RLC PDUs from the MAC PDU. In addition, the MACs 230 and 260 may provide a mapping function, a scheduling information reporting function, an HARQ function, a function of adjusting priorities between logical channels, a function of adjusting priorities between UEs, an MBMS service identification function, a transmission format selection function, and a padding function. Of course, the disclosure is not limited to the example above.

Physical (PHY) layers 240 and 250 perform channel coding and modulation on higher-layer data, make the data into OFDM symbols, and transmit the same via a wireless channel, or perform demodulation and channel decoding on OFDM symbols received via a wireless channel and transfer the same to a higher layer. In addition, the physical layers also use hybrid ARQ (HARQ) for additional error correction, and a reception end transmits, using 1 bit, information on whether a packet transmitted by a transmission end has been received. This is referred to as HARQ ACK/NACK information.

In LTE, downlink HARQ ACK/NACK information for uplink data transmission is transmitted via a physical hybrid-ARQ indicator channel (PHICH) that is a physical channel, and in NR, whether retransmission is necessary or whether to perform new transmission may be determined via scheduling information of a UE in a physical dedicated control channel (PDCCH) that is a channel via which downlink/uplink resource allocation, etc. are transmitted. This is because asynchronous HARQ is applied in NR. Uplink HARQ ACK/NACK information for downlink data transmission may be transmitted via a physical channel, such as a physical uplink control channel (PUCCH) or a physical uplink shared channel (PUSCH). The PUCCH is generally transmitted in an uplink of a PCell, which will be described later. However, when supported by the UE, the base station may additionally transmit the PUCCH to the UE in an SCell, which will be described later, and the SCell in this case is referred to as a PUCCH SCell.

Although not illustrated in FIG. 2, radio resource control (RRC) layers are present above the PDCP layers of the UE and the base station, respectively, and access and measurement-related configuration control messages for radio resource control may be exchanged in the RRC layers.

The PHY layer may include one or multiple frequencies/carriers, and a technology of concurrently configuring and using multiple frequencies is referred to as a carrier aggregation technology (hereinafter, referred to as CA). In the CA technology, instead of using only one carrier for communication between a terminal (or user equipment (UE)) and a base station (eNB or gNB), one primary carrier and one or multiple sub-carriers are additionally used so that the amount of transmission may be dramatically increased by the number of sub-carriers. In LTE/NR, a cell in a base station, which uses a primary carrier, is referred to as a main cell or a primary cell (PCell), and a cell in a base station, which uses a sub-carrier, is referred to as a sub-cell or a secondary cell (SCell).

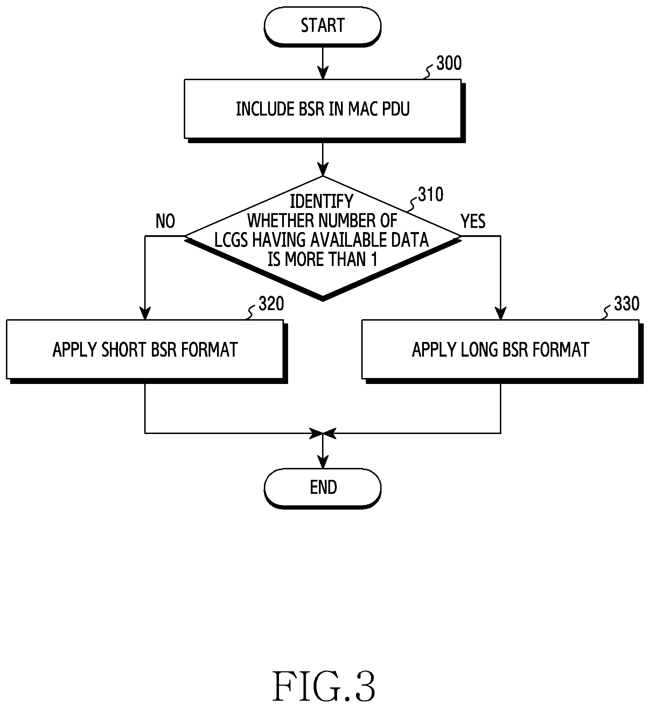

FIG. 3 is a diagram illustrating a method of determining a buffer status report (BSR, hereinafter, referred to as BSR) format when a UE reports an available amount of uplink data (hereinafter, referred to as an uplink buffer size) to a base station in the NR system according to an embodiment of the disclosure.

Referring to FIG. 3, when a UE transmits a BSR by including 300 the same in a MAC PDU, one of a long BSR and a short BSR may be selected to perform transmission 310, based on the number of logical channel groups (hereinafter, referred to as LCGs) having an uplink buffer size greater than 0. Specifically, if there is more than one (exceeding) LCG having an uplink buffer size greater than 0, the UE may select a long BSR MAC CE 330, and if there is one LCG having an uplink buffer size greater than 0, the UE may select a short BSR MAC CE 320.

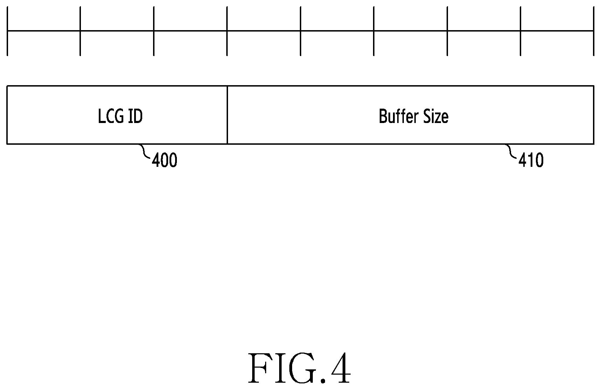

FIG. 4 is a diagram illustrating a short BSR/short truncated BSR MAC CE format defined in the NR system according to an embodiment of the disclosure.

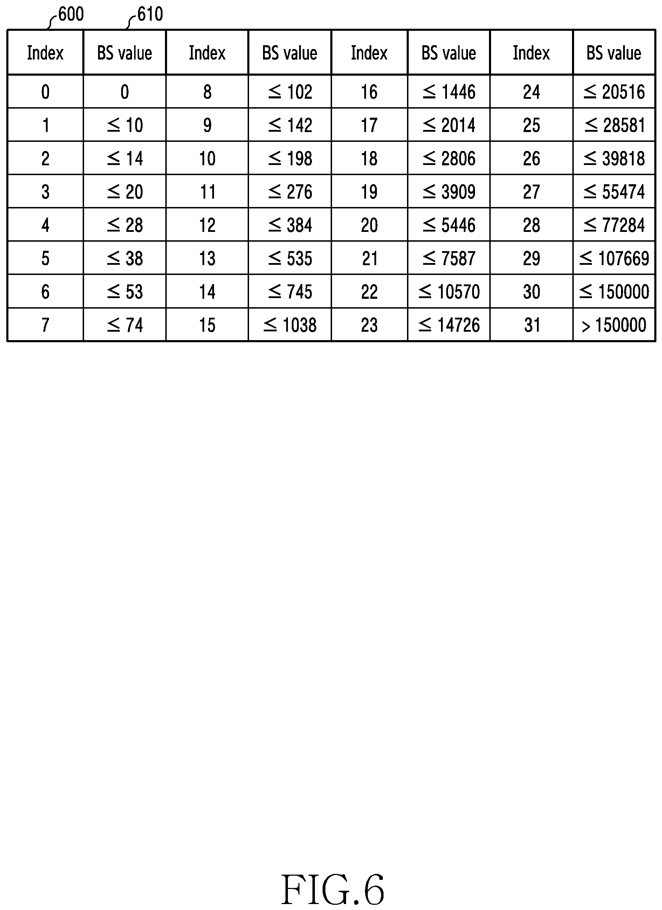

Referring to FIG. 4, a short BSR MAC CE may include a 3-bit LCG ID 400 and a 5-bit buffer size 410 field. The LCG ID 400 expresses an ID (0-7) of an LCG, and the buffer size 410 field indicates a buffer size (BS) index corresponding to the LCG ID 400, which is determined by an uplink buffer size. The BS index has a value between 0 and 31. The BS index may indicate an index of a corresponding interval including an uplink buffer size corresponding to the LCG ID 400 among buffer size intervals defined in the predefined buffer size table (see FIG. 6).

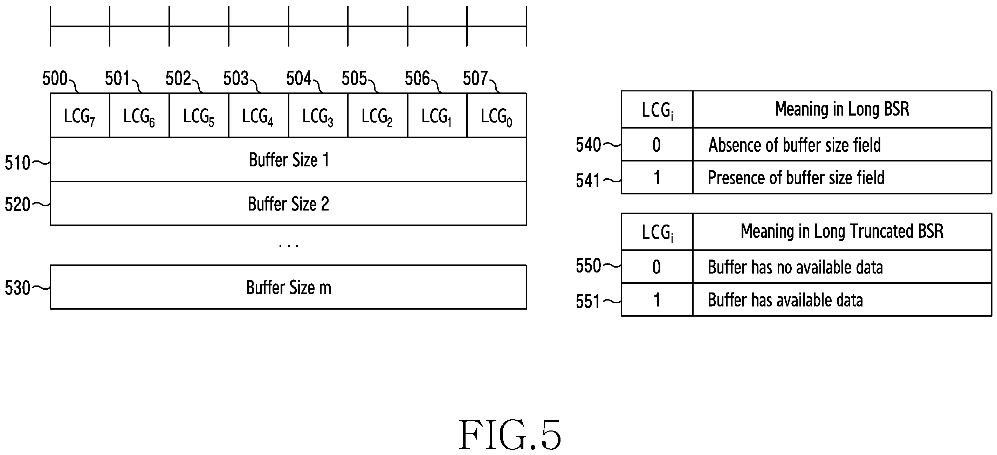

FIG. 5 is a diagram illustrating a long BSR/long truncated BSR MAC CE format defined in the NR system according to an embodiment of the disclosure.

Referring to FIG. 5, a long BSR MAC CE may indicate the presence or absence of a buffer size field corresponding to each of eight LCGs from LCG ID 7 500 to LCG ID 0 507 by using eight bits of a first byte. If a bit is 0 540, this may indicate that a buffer size field of an LCG corresponding to the bit of the long BSR MAC CE does not exist. On the contrary, if a bit is 1 541, this may indicate that a buffer size field of an LCG corresponding to the bit of the long BSR MAC CE exists.

Therefore, the long BSR MAC CE may have as many buffer size fields as the number of bits of 1 in the first byte. Lengths of buffer size fields 510, 520, and 530 of the long BSR MAC CE may be 8 bits. A long truncated BSR MAC CE may indicate, using the 8 bits of the first byte, whether an uplink buffer size of each of the 8 LCGs from LCG ID 7 500 to LCG ID 0 507 is greater than 0 (that is, whether there is available uplink data). If a bit is 0 550, this may indicate that a corresponding LCG has available uplink data, and if a bit is 1 551, this may indicate that a corresponding LCG does not have available uplink data.

The number of buffer size fields 510, 520, and 530 in the long truncated BSR MAC CE is expressible by an L 750 field of a MAC subheader attached to the front of the MAC CE, and the buffer size fields 510, 520, and 530 are added to the MAC CE in descending order of priority among LCGs having available data, as much as remaining uplink resources. The buffer size field of the long BSR or long truncated BSR may also indicate a BS index determined by the uplink buffer size, similarly to the buffer size field of the short BSR.

In the NR system, a long BSR buffer size table for long BSR is defined, and an index of a buffer size interval including an uplink buffer size may be indicated by a buffer size field. The length of the buffer size 410 of the short BSR MAC CE is 5 bits, while the length of the buffer size field of the long BSR or long truncated BSR MAC CE is 8 bits, and the buffer size table referred to by the long BSR defines a total of 255 BS indexes from 0 to 254, and 255 is reserved and not used. After receiving a BS index, a base station may acquire information on an uplink buffer size for each LCG by referring to the buffer size table for long BSR.

FIG. 6 is a diagram illustrating a buffer size table for short BSR defined in NR according to an embodiment of the disclosure.

The buffer size table for short BSR may be defined for BS values 610, i.e., buffer size intervals, corresponding to respective 32 BS indexes 600 expressed as 0 to 31. For example, if the BS index 600 is 2, this indicates that a corresponding uplink buffer size has a value between 11 bytes and 14 bytes. After receiving a short BSR MAC CE, a base station may perform uplink resource allocation by referring to an uplink buffer size interval corresponding to LCG ID 400 and buffer size 400 field values.

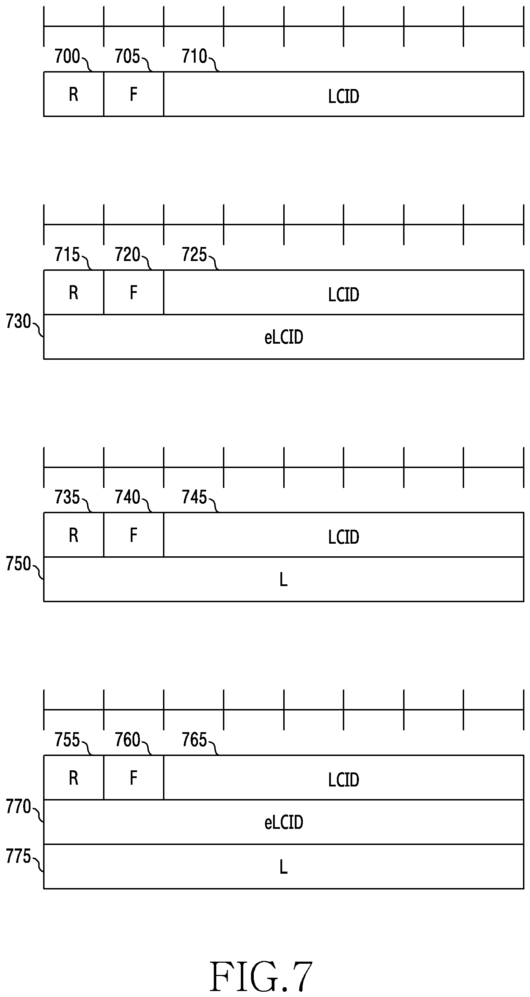

FIG. 7 is a diagram illustrating a MAC subheader format defined the NR system according to an embodiment of the disclosure.

Referring to FIG. 7, a 1-byte MAC subheader including R 700, F 705, and LCID 710 may be attached in front of a MAC CE with a fixed length. In this case, the MAC CE may be indicated with the LCID 710. In addition, according to an embodiment, a 2-byte MAC subheader including R 715, F 720, LCID 725, and eLCID 730 may be attached in front of a MAC CE with a fixed length. In this case, the presence or absence of the eLCID 730 and a length thereof may be indicated by the LCID 725, and the MAC CE may be indicated by the eLCID 730.

In addition, according to an embodiment, a 2-byte MAC subheader including R 735, F 740, LCID 745, and L 750 fields may be attached in front of a MAC CE with a variable length. In this case, the F 740 may indicate whether a length of the L 750 field is a 1 byte or 2 bytes, and the MAC CE may be indicated by the LCID 750. According to an embodiment, a 3-byte MAC subheader including R 755, F 760, LCID 765, eLCID 770, and L 775 may be attached in front of a MAC CE with a variable length. In this case, the F 760 may indicate whether a length of the L 775 is 1 byte or 2 bytes, the LCID 765 may indicate the presence or absence of the eLCID 770 and a length thereof, and the eLCID 770 may indicate the MAC CE. Since the short BSR, the short truncated BSR, the long BSR, and the long truncated BSR have different LCID values of the MAC subheader attached in front thereof, the base station having received the same may distinguish the formats of the received BSRs.

The long BSR, long truncated BSR, short BSR, and short truncated BSR defined in the NR system have the following characteristics. Of course, the disclosure is not limited to the following examples.

- A BS index expressed as a buffer size field of a MAC CE does not correspond to a specific buffer size, but may correspond to a specific buffer size interval of a predefined table.

- A size of a buffer size interval may increase as a BS index value increases, that is, as a buffer size increases.

Therefore, as an uplink buffer size increases, a UE transmits a BS index corresponding to a greater buffer size interval, and a base station receiving the same has difficulty in predicting an exact buffer size, which may make efficient uplink resource allocation difficult.

The disclosure newly introduces the NBT, and proposes a method in which, when reporting a buffer size for each LCG to a base station, a UE reports a more detailed buffer size interval by referring to the NBT. The NBT proposed in the disclosure may be a predefined fixed table. Of course, the disclosure is not limited to the example above. In addition, the NBT proposed in the disclosure may be changed by a base station transferring an NBT-related parameter via an RRC message or a MAC CE. Of course, the disclosure is not limited to the example above, and an NBT-related parameter may be transferred via another type of message.

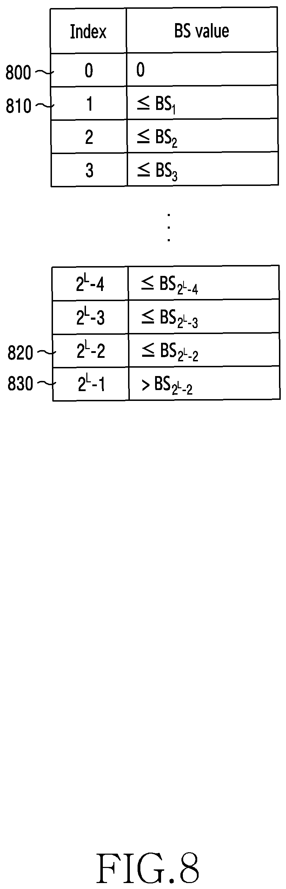

FIG. 8 is a diagram illustrating a method of configuring an NBT according to an embodiment of the disclosure.

As shown in FIG. 8, the NBT may include a total of 2^{L} indexes. L may be equal to a buffer size field length of L bits of a corresponding LCG, which is reported by referencing the NBT in an NBT short BSR MAC CE or an NBT long BSR MAC CE.

For example, if the buffer size field of the LCG reported by referencing the NBT is 13 bits, the number of indexes of NBT may be 2¹³, and included indexes may be from 0 to 2¹³-1. For example, if the buffer size field of the LCG reported by referencing the NBT is 16 bits, the number of indexes of NBT may be 2¹⁶, and included indexes may be from 0 to 2¹⁶-1.

According to an embodiment, index 0 800 of the NBT may indicate that an uplink buffer size of the LCG is 0, that is, there is no available data. Index 1 810 of the NBT may indicate that the uplink buffer size is greater than 0 and is less than or equal to BS₁. That is, BS₁ may indicate an upper limit of a BS interval corresponding to index 1 810. In addition, the NBT specifies upper limits BS₁, BS₂, ..., BS₂^{L}₋₂ of BS intervals corresponding to respective indexes from index 1 810 to index 2^{L}-2 820. The NBT may interpret that the uplink buffer size intervals BS₁, BS₂, ..., BS₂^{L}₋₂ of corresponding to respective indexes from index 1 810 to index 2^{L}-2 820 have lower limits as upper limits of immediately preceding indexes, and have upper limits as the upper limit of the corresponding indexes.

In addition, in the NBT, as the indexes increases from index 1 810 to index 2^{L}-2 820, the upper limits of the corresponding uplink buffer sizes may gradually increase. For example, if index y is greater than index x, a corresponding upper limit value BS_{y} may be greater than that of BSₓ. Index 2^{L}-1 830 may indicate an interval in which an uplink buffer size is larger than that of BS₂^{L}₋₂. In the NBT, the sequence BS₁, BS₂, ..., BS₂^{L}₋₂ of the upper limit values of the BS intervals corresponding to the respective indexes from index 1 810 to index 2^{L}-2 820 may be formed by a specific rule.
- As an example, the sequence may be a geometric sequence in which a ratio of two consecutive terms is constant. For example, BS₁ may be expressed as Bₘᵢₙ. BS₂^{L}₋₂ may be expressed as Bₘₐₓ. BS₂, ..., BS₂^{L}₋₂ may be equal to a smallest natural number among values greater than or equal to a value obtained by multiplying an immediately preceding value by p (hereinafter, a smallest natural number among values greater than or equal to x is expressed as ceil(x)). For example, BSₙ may be expressed as ceil(p·BSₙ₋₁). p may be expressed as (Bₘₐₓ / Bₘᵢₙ)^{1/(N-1)}. N may be equal to 2^{L}-2.
- As another example, the sequence may be an arithmetic sequence in which a difference between two consecutive terms is constant. For example, BS₁ may be expressed as Bₘᵢₙ. BS₂^{L}₋₂ may be expressed as Bₘₐₓ. BS₂, ..., BS₂^{L}₋₂ may be equal to a smallest natural number among values greater than or equal to a value obtained by adding p to the immediately preceding value. For example, BSₙ may be expressed as ceil(p+BSₙ₋₁). p may be expressed as ((Bₘₐₓ-Bₘᵢₙ)/(N-1). N may be equal to 2^{L}-2.

Bₘᵢₙ and Bₘₐₓ may be transferred by a base station to a UE via an RRC message or a MAC CE.

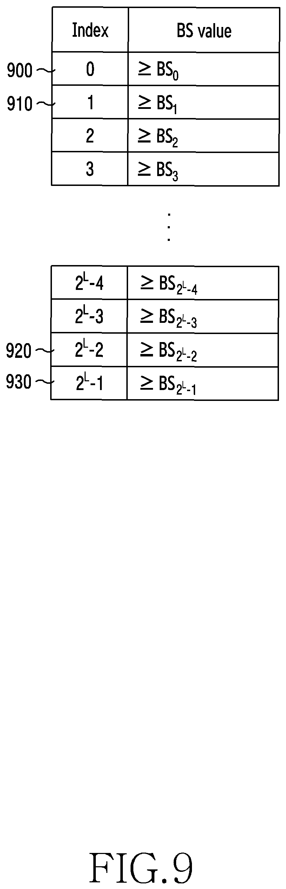

FIG. 9 is a diagram illustrating a method of configuring an NBT according to an embodiment of the disclosure.

Referring to FIG. 9, the NBT may indicate lower limits of respective uplink buffer size intervals corresponding to index 0 900 to index 2^{L}-1 930, as BS₀, BS₁, ..., BS₂^{L}₋₁. In this case, BS₀ may be expressed as Bₘᵢₙ. In this case, BS₂^{L}₋₁ may be expressed as Bₘₐₓ. In addition, BS₀, BS₁, ..., BS₂^{L}₋₁ may be a specific sequence formed by the aforementioned rule. As an example, BS₀, BS₁, ..., BS₂^{L}₋₁ may be a geometric sequence in which Bₘᵢₙ is a first term and Bₘₐₓ is a last term. As another example, BS₀, BS₁, ..., BS₂^{L}₋₁ may be an arithmetic sequence in which Bₘᵢₙ is a first term and Bₘₐₓ is a last term.

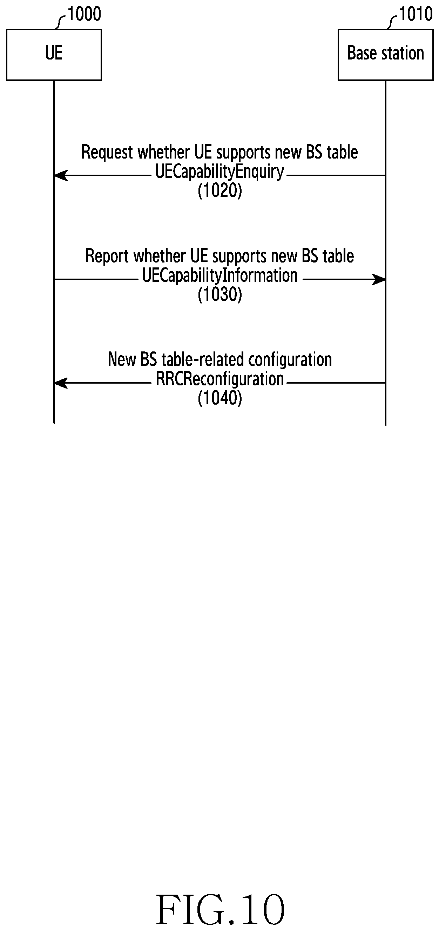

FIG. 10 is a diagram illustrating a signaling procedure that a UE and a base station proceed with for NBT use according to an embodiment of the disclosure.

Referring to FIG. 10, a base station 1010 may transfer, to a UE 1000 in a connected state, a UE capability request (UECapabilityEnquiry) message 1020 for requesting a capability report. The base station may include a UE capability request for each RAT type in the UECapabilityEnquiry message 1020. The request for each RAT type may include requested frequency band information.

In addition, when the base station 1020 requests the UE 1000 to generate a UECapabilityInformation message 1030 via the capability request message 1020, filtering information capable of indicating conditions and restrictions may be included. In this case, via the filtering information, the base station 1010 may indicate whether it is required for the UE to report whether the NBT is supported. The UE 1000 may report a response to the capability request message to the base station 1010 by configuring the UE capability information (UECapabilityInformation) message 1030 corresponding to the UECapabilityEnquiry message 1020. In this case, the UECapabilityInformation message 1310 may include a parameter indicating whether the UE supports the NBT.

For example, the parameter may be 1-bit information. In addition, for example, if the parameter is included, this may indicate that the NBT is supported, and if the parameter is not included, this may indicate that the NBT is not supported. The base station 1010 may determine whether the UE 1000 supports the NBT, based on the received UECapabilityInformation message 1030. If determining that the UE 1000 supports the NBT, the base station 1010 may indicate, via an RRCReconfiguration message 1040, the UE 1000 to report an uplink buffer size by referencing the NBT when a specific condition is satisfied for a specific LCG. More specifically, for an NBT-related configuration, the RRCReconfiguration message 1040 may include at least one of the following configuration information. Of course, the disclosure is not limited to the following examples.
- At least one of a specific DRB or DRB list, a specific LCG or LCG list, and a specific LCH or LCH list, which forces reporting of an uplink buffer size by referring to the NBT or allows the NBT to be referred to when reporting an uplink buffer size, may be included.
- An NBT index or NBT number which may indicate the NBT to be referenced may be included.
- Bₘᵢₙ which is a smallest value except for 0 among upper or lower limits for each index of the NBT may be included.
- Bₘₐₓ which is a largest value among upper or lower limits for each index of the NBT may be included.
- The number of indexes of the NBT or L when the number of the indexes is expressed as 2^{L} may be included.
- When upper or lower limit values of consecutive indexes of the NBT are expressed as a sequence, information indicating whether the sequence is a geometric sequence (including a modified form of a geometric sequence) or an arithmetic sequence (including a modified form of an arithmetic sequence) may be included.
- Conditions that need to be satisfied to refer to the NBT may be included. For example, a specific threshold value may be included to indicate the NBT to be referenced only when an uplink buffer size of the LCG is greater than or equal to the threshold value.

When information included in the RRCReconfiguration message 1040 has already been configured, the UE 1000 having received the RRCReconfiguration message 1040 may update corresponding information with the information included in the RRCReconfiguration message 1040.

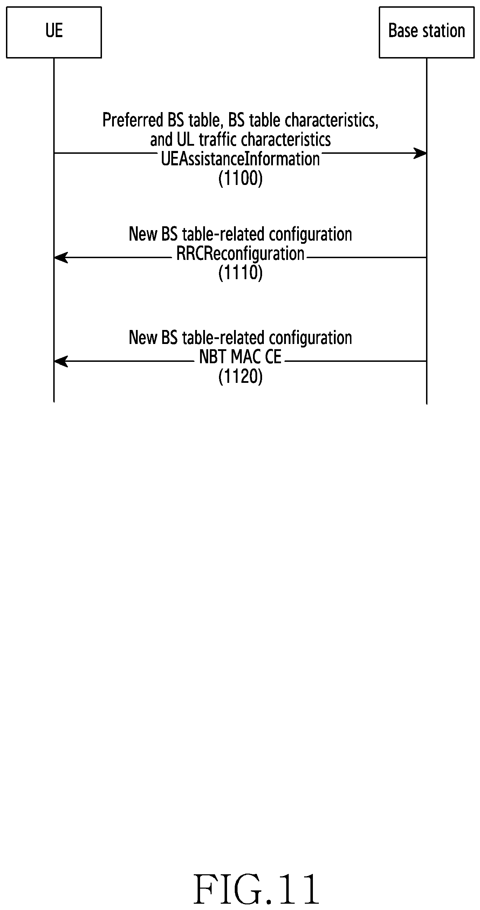

FIG. 11 is a diagram illustrating an operation in which a UE provides NBT-related information to a base station via UEAssistanceInformation, and the base station updates an NBT configuration of the UE via RRCReconfiguration or an NBT MAC CE in consideration of the information, according to an embodiment of the disclosure.

Referring to FIG. 11, when transmitting a UEAssistanceInformation message 1100 to a base station, a UE may include the following NBT-related information.
- XR traffic characteristic-related parameters may be included. The parameters may be parameters that may express an XR data burst size, a PDU set size, or XR uplink buffer sizes generated periodically by the UE.
- The UE may include a parameter that specifies whether a buffer size table to be referenced or preferred when reporting an uplink buffer size to the base station is the legacy BS table (including the BS table for a long BSR and a short BSR) or the NBT. If there are multiple candidate NBTs, a parameter that specifies an NBT may be included.

In addition, the aforementioned NBT-related information may be included in the UEAssistanceInformation message 1100 for each UE, each DRB of the UE, each LCG of the UE, or each LCH of the UE.

Referring to FIG. 11, after receiving the UEAssistanceInformation message 1100 transmitted by the UE, the base station may change an NBT-related configuration of the UE via the RRCReconfiguration message 1110. An RRCReconfiguration message 1110 may include the same type of configuration information as the NBT-related configuration information included in the aforementioned RRCReconfiguration message 1040.

The UE having received the RRCReconfiguration message 1110 may configure an NBT-related configuration information according to the NBT-related configuration information included in the RRCReconfiguration message 1110. Referring to FIG. 11, the base station may configure the NBT-related configuration information of the UE via an NBT MAC CE 1120. The NBT MAC CE 1120 may include the same type of configuration information as the NBT-related configuration information included in the RRCReconfiguration message 1110. The NBT MAC CE 1120 may include only some types of configuration information among the NBT-related configuration information included in the RRCReconfiguration message 1110. The NBT MAC CE 1120 may also include other types of configuration information in addition to the NBT-related configuration information included in the RRCReconfiguration message 1110. The UE having received the NBT MAC CE 1120 may change corresponding NBT-related configuration according to the configuration information included in the NBT MAC CE 1120.

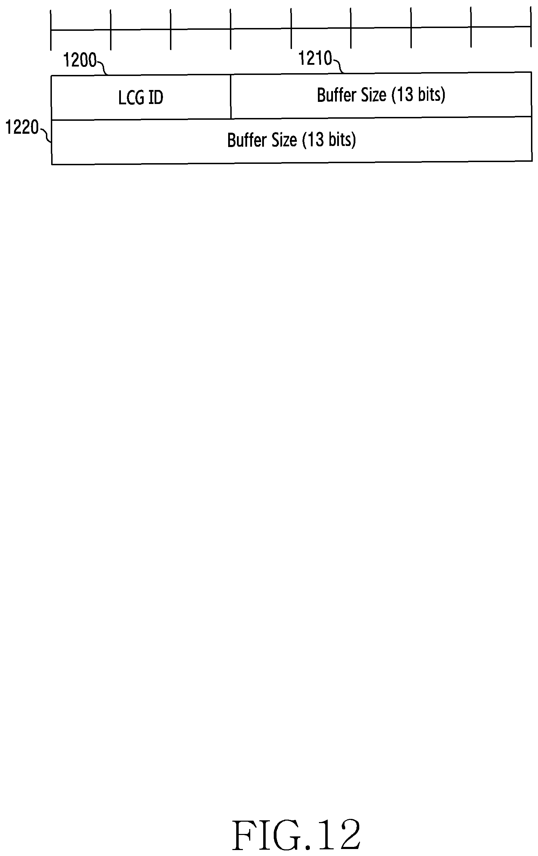

FIG. 12 is a diagram illustrating an NBT short BSR MAC CE format that may be used when a UE reports an uplink buffer size to a base station by referring to an NBT according to an embodiment of the disclosure.

Referring to FIG. 12, 3 bits of a first byte of an NBT short BSR MAC CE may indicate an LCG ID 1200. The LCG ID 1200 may indicate an LCG corresponding to an uplink buffer size to be reported via the NBT short BSR. The LCG ID 1200 may indicate one LCG from LCG ID 0 to LCG ID 7. A buffer size field may be indicated by 13 bits in which a second byte 1220 and 5 bits 1210 remaining after excluding the LCG ID 3 bits 1200 of the first byte of the NBT short BSR MAC CE are combined.

The buffer size field may indicate an index of a buffer size interval corresponding to an uplink buffer size of the LCG ID 1200 of the UE. The buffer interval may correspond to one of index-specific buffer intervals defined in the NBT. In this case, the NBT may include up to 2¹³ indexes corresponding to different buffer intervals.

In addition, according to an embodiment, the buffer size field may directly indicate an uplink buffer size of the LCG ID 1200 of the UE in bytes without referring to a specific NBT. In this case, the uplink buffer size that can be indicated by the buffer size may be from 0 to (2¹³ - 1) bytes. The UE may report the uplink buffer size to the base station in more detail by directly expressing the uplink buffer size in bytes or by referring to the NBT that defines more detailed buffer size intervals than the existing buffer size table for short BSR by using the NBT short BSR MAC CE format.

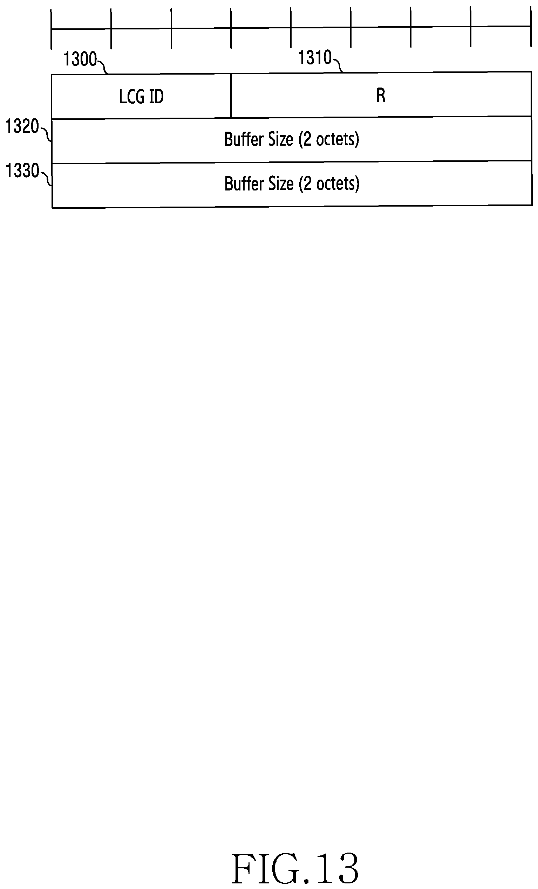

FIG. 13 is a diagram illustrating an NBT short BSR MAC CE format that may be used when a UE reports an uplink buffer size to a base station by referring to an NBT according to an embodiment of the disclosure.

Referring to FIG. 13, 3 bits of a first byte of an NBT short BSR MAC CE may indicate an LCG ID 1300. The LCG ID 1300 may indicate an LCG corresponding to an uplink buffer size to be reported via the NBT short BSR. The LCG ID 1300 may indicate one LCG from LCG ID 0 to LCG ID 7. 5 bits 1310 remaining after excluding the LCG ID 3 bits 1300 of the first byte of the NBT short BSR MAC CE may be used as a reserved field. A buffer size field may be indicated by 16 bits in which a second byte 1320 and a third byte 1330 of the NBT short BSR MAC CE are combined.

According to an embodiment, the buffer size field may indicate an index of a buffer size interval corresponding to an uplink buffer size of the LCG ID 1300 of the UE. The buffer size interval may correspond to one interval among index-specific buffer size intervals defined in the NBT. In this case, the NBT may include up to 2¹⁶ indexes corresponding to different buffer size intervals.

In addition, according to an embodiment, the buffer size field may directly indicate an uplink buffer size of the LCG ID 1300 of the UE in bytes without referring to a specific NBT. In this case, the uplink buffer size that can be indicated by the buffer size may be from 0 to (2¹⁶ - 1) bytes. The UE may report the uplink buffer size to the base station in more detail by directly expressing the uplink buffer size in bytes or by referring to the NBT that defines more detailed buffer size intervals than the existing buffer size table for short BSR by using the NBT short BSR MAC CE format. The NBT referenced when using the NBT short BSR MAC CE may be the same NBT as the NBT referenced when using the NBT long BSR MAC CE.

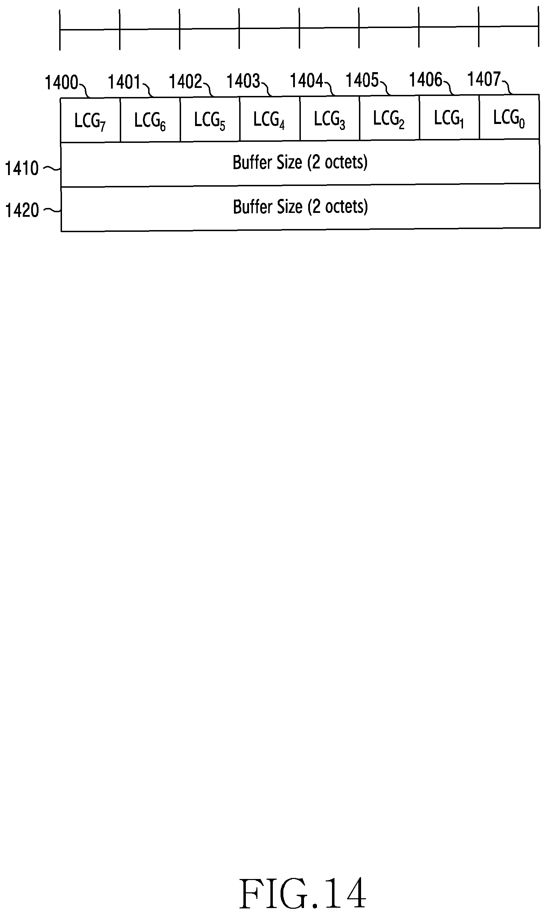

FIG. 14 is a diagram illustrating an NBT short BSR MAC CE format that may be used when a UE reports an uplink buffer size to a base station by referring to an NBT according to an embodiment of the disclosure.

Referring to FIG. 14, 8 bits of a first byte of an NBT short BSR MAC CE may be interpreted as bitmaps corresponding to 8 LCGs from LCG ID 7 to LCG ID 0, respectively. If a specific bit among the 8 bits is configured to be 1, this may be interpreted that the NBT short BSR MAC CE reports an uplink buffer size of an LCG corresponding to the bit. A buffer size field of the LCG may be indicated by 16 bits in which a second byte 1410 and a third byte 1420 of the NBT short BSR MAC CE are combined.

According to an embodiment, the buffer size field may indicate an index of a buffer size interval corresponding to an uplink buffer size of the LCG of the UE. The buffer size interval may correspond to one interval among index-specific buffer size intervals defined in the NBT. In this case, the NBT may include up to 2¹⁶ indexes corresponding to different buffer size intervals.

In addition, according to an embodiment, the buffer size field may directly indicate an uplink buffer size of the LCG of the UE in bytes without referring to a specific NBT. In this case, the uplink buffer size that can be indicated by the buffer size may be from 0 to (2¹⁶ - 1) bytes. The UE may report the uplink buffer size to the base station in more detail by directly expressing the uplink buffer size in bytes or by referring to the NBT that defines more detailed buffer size intervals than the existing buffer size table for short BSR by using the NBT short BSR MAC CE format. The NBT referenced when using the NBT short BSR MAC CE may be the same NBT as the NBT referenced when using the NBT long BSR MAC CE.

In addition, according to an embodiment, the UE may report the uplink buffer size to the base station via an NBT short BSR MAC CE which has the same format as the short BSR MAC CE illustrated in FIG. 4, but has a new LCID or eLCID. In this case, the buffer size field 410 may indicate an index corresponding to a buffer size interval including the uplink buffer size of the LCG corresponding to the LCG ID 400. The buffer size interval may correspond to one interval among index-specific buffer size intervals defined in the NBT.

In addition, according to an embodiment, the UE may report the uplink buffer size to the base station via the short BSR MAC CE illustrated in FIG. 4. In this case, the buffer size field 410 may indicate an index corresponding to a buffer size interval including the uplink buffer size of the LCG corresponding to the LCG ID 400. The buffer size interval may correspond to one interval among index-specific buffer size intervals defined in the NBT. In this case, the base station having received the short BSR MAC CE may identify that the buffer size table to be referenced when interpreting the buffer size field of the LCG transmitted by the UE is the NBT, by the NBT configuration information configured for the UE in advance via the NBT MAC CE or RRCReconfiguration.

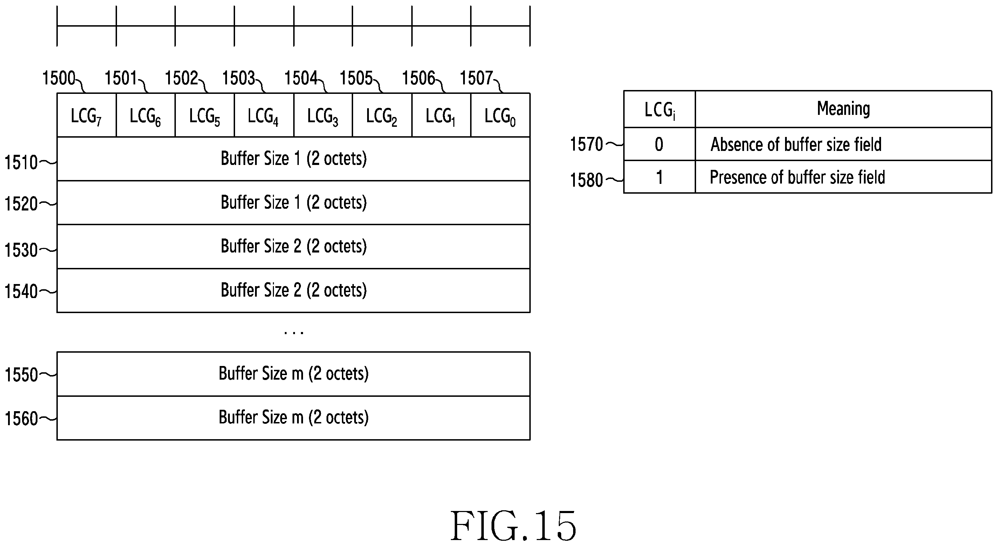

FIG. 15 is a diagram illustrating an NBT long BSR MAC CE format that may be used when a UE reports an uplink buffer size to a base station by referring to an NBT according to an embodiment of the disclosure.

Referring to FIG. 15, 8 bits 1500, 1501, 1502, 1503, 1504, 1505, 1506, and 1507 of a first byte of an NBT long BSR MAC CE may be interpreted as bitmaps corresponding to 8 LCGs from LCG ID 7 to LCG ID 0, respectively. The fact that a specific bit among the 8 bits has been configured to be 1 may indicate that there exists, in the NBT long BSR MAC CE, a buffer size field for reporting an uplink buffer size of an LCG corresponding to the bit configured to be 1. In addition, the fact that a specific bit among the 8 bits has been configured to be 0 may indicate that there exists no buffer size field for reporting an uplink buffer size of an LCG corresponding to the bit configured to be 0 in the NBT long BSR MAC CE.

According to an embodiment, bytes remaining after excluding a first byte of the NBT long BSR MAC CE may include one or multiple buffer size fields. The buffer size field may exist for each LCG configured to be 1 among the LCG ID bitmaps. The buffer size field for each LCG may be determined by the number of indexes for each buffer size interval defined in the NBT referred to by a corresponding LCG. For example, if the number of indexes of the NBT is fewer than or equal to 2^{L}, a buffer size field length may be L bits.

For example, if the number of indexes of the NBT to be referenced is fewer than or equal to 2¹⁶, the buffer size field may have a length of 16 bits by combining two consecutive bytes. In this case, the 16 bits obtained by combining a second byte 1510 and a third byte 1520 of the NBT long BSR MAC CE may be interpreted as a buffer size field of a specific LCG.

According to an embodiment, the buffer size field may indicate an index of a buffer size interval corresponding to an uplink buffer size of the LCG of the UE. The buffer size interval may correspond to one interval among index-specific buffer size intervals defined in the NBT. In this case, the NBT may include up to 2¹⁶ indexes corresponding to different buffer size intervals.

In addition, according to an embodiment, the buffer size field may directly indicate an uplink buffer size of the LCG of the UE in bytes without referring to a specific NBT. In this case, the uplink buffer size that can be indicated by the buffer size may be from 0 to (2^{L} - 1) bytes.

L may indicate a length of L bits of the buffer size field. For example, if L is 16, the buffer size field may be indicated from 0 to (2¹⁶ - 1) bytes. The UE may report the uplink buffer size to the base station in more detail by directly expressing the uplink buffer size in bytes or by referring to the NBT that defines more detailed buffer size intervals than the existing buffer size table for long BSR by using the NBT long BSR MAC CE format.

If the NBT long BSR MAC CE includes the multiple buffer size fields, an arrangement order of the buffer size fields may be determined by referring to priority levels of corresponding LCGs. For example, the LCGs may be arranged in order from an LCG with a highest priority level to an LCG with a lowest priority level. A priority level of an LCG may be configured to be a highest priority level among priority levels of LCHs included in the LCG.

In the NBT long BSR MAC CE format, a buffer size field may be added only for an LCG for which an uplink buffer size is reported by referencing the NBT. In this case, for LCGs remaining after excluding the LCG for which the uplink buffer size is reported by referencing the NBT, uplink buffer sizes may be reported via the existing long BSR or short BSR or a padding BSR.

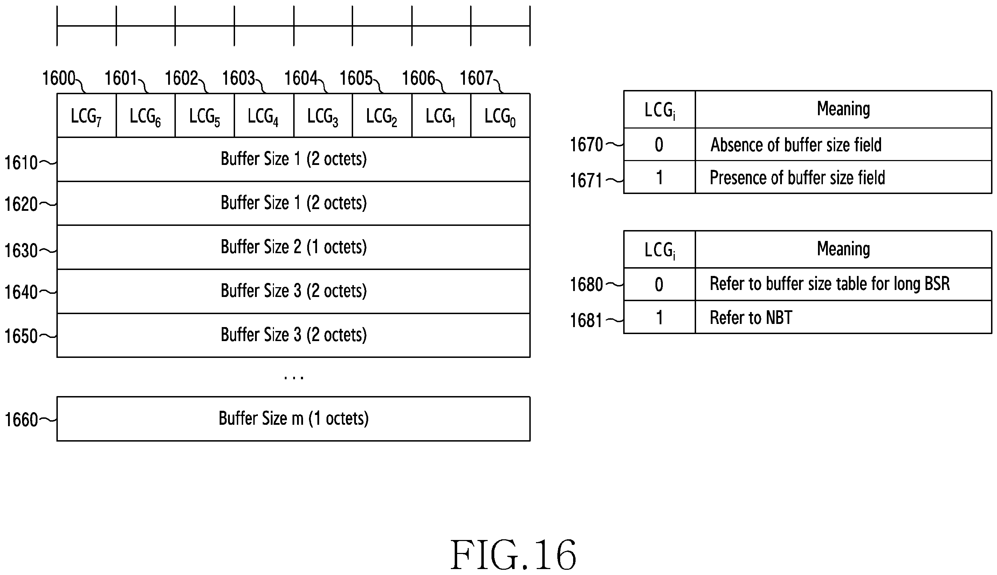

FIG. 16 is a diagram illustrating an NBT long BSR MAC CE format that may be used when a UE reports an uplink buffer size to a base station by referring to an NBT according to an embodiment of the disclosure.

Referring to FIG. 16, 8 bits 1600, 1601, 1602, 1603, 1604, 1605, 1606, and 1607 of a first byte of an NBT long BSR MAC CE may be interpreted as bitmaps corresponding to 8 LCGs from LCG ID 7 1600 to LCG ID 0 1607, respectively. In an embodiment, the fact that a specific bit among the 8 bits has been configured to be 1 1671 may indicate that there exists, in the NBT long BSR MAC CE, a buffer size field for reporting an uplink buffer size of an LCG corresponding to the bit configured to be 1.

In this case, the fact that a specific bit among the 8 bits has been configured to be 0 1670 may indicate that there exists no buffer size field for reporting an uplink buffer size of an LCG corresponding to the 0 bit in the NBT long BSR MAC CE. In this case, for a buffer size table referred to by each LCG, a buffer size table for long BSR, an NBT, or a specific NBT among multiple NBTs may be configured by an NBT-related configuration for each LCG configured by a base station in advance via RRC or MAC CE.

In addition, according to an embodiment, the fact that a specific bit among the 8 bits has been configured to be one of two values (0 or 1 1680 or 1681) may indicate that there always exists, in the NBT long BSR MAC CE, a buffer size field for reporting an uplink buffer size of an LCG corresponding to the bit configured to be one of the two values, and that the uplink buffer size is reported by referencing the NBT.

In addition, the fact that a specific bit among the 8 bits has been configured to be the other of the two values (0 or 1 1680 or 1681) may indicate that there always exists, in the NBT long BSR MAC CE, a buffer size field for reporting an uplink buffer size of an LCG corresponding to the bit configured to be the other of the two values, and that the uplink buffer size is reported by referring to the buffer size table (legacy table) for long BSR.

Bytes remaining after excluding the first byte of the NBT long BSR MAC CE may include one or multiple buffer size fields. For a buffer size field, a field length allocated to the NBT long BSR MAC CE may be determined by which table is a buffer size table referred to by a corresponding LCG.

For example, a buffer size field for each LCG may be determined by the number of indexes included in a buffer size table referred to by a corresponding LCG. For example, if an LCG refers to the buffer size table for long BSR, a buffer size field may be 1 byte. If the LCG refers to an NBT that defines 2^{L} indexes, a length of the buffer size field may be L bits. L may be 8. L may be 16. L may have a value larger than 16. Of course, the disclosure is not limited to the example above, and a value of L is not limited.

The buffer size field may indicate an index corresponding to a buffer size interval including an uplink buffer size of an LCG in a buffer size table referenced by the LCG. The buffer size interval may correspond to one interval among index-specific buffer size intervals defined in the referenced buffer size table.

In another embodiment, the buffer size field may directly indicate an uplink buffer size of the LCG of the UE in bytes without referring to a specific NBT. In this case, the uplink buffer size that can be indicated by the buffer size may be from 0 to (2^{L} - 1) bytes. L may indicate a length of L bits of the buffer size field. For example, if L is 16, the buffer size field may be indicated from 0 to (2¹⁶ - 1) bytes. L may have a value larger than 16. Of course, the disclosure is not limited to the example above, and a value of L is not limited.

An LCG which is to directly indicate an uplink buffer size in bytes via the buffer size field may be configured in advance by the base station via RRC or MAC CE. In the NBT long BSR MAC CE, whether to directly report an uplink buffer size of a specific LCG in bytes may be notified to the base station by configuring a bit corresponding to the LCG in the first byte of the NBT long BSR MAC CE to be a previously agreed value.

The UE may report the uplink buffer size to the base station in more detail by directly expressing the uplink buffer size in bytes or by referring to the NBT that defines more detailed buffer size intervals than the existing buffer size table for long BSR by using the NBT long BSR MAC CE format.

If the NBT long BSR MAC CE includes the multiple buffer size fields, an arrangement order of the buffer size fields may be determined by referring to priority levels of corresponding LCGs. For example, the LCGs may be arranged in order from an LCG with a highest priority level to an LCG with a lowest priority level. The priority level of an LCG may be configured to be a highest priority level among priority levels of LCHs included in the LCG.

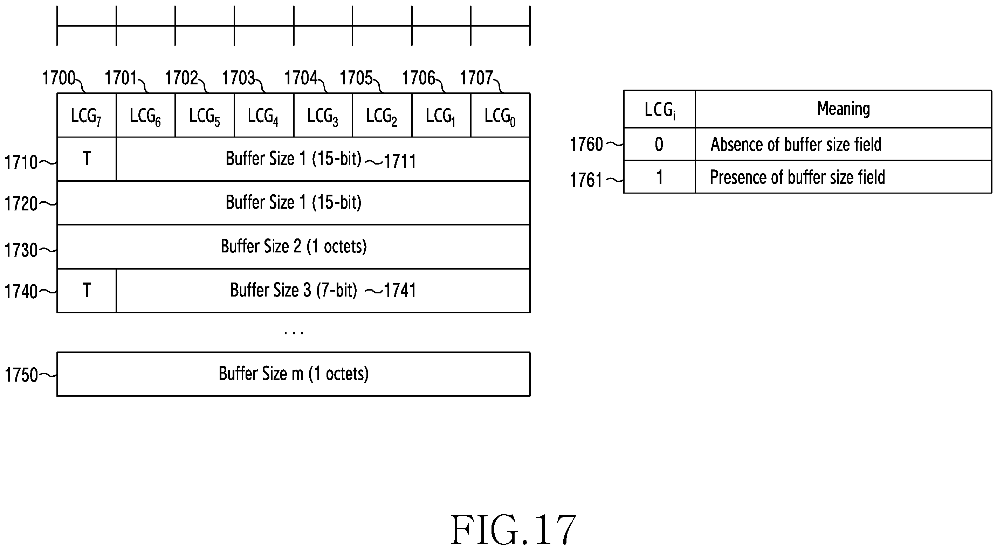

FIG. 17 is a diagram illustrating an NBT long BSR MAC CE format that may be used when a UE reports an uplink buffer size to a base station by referring to an NBT according to an embodiment of the disclosure.

Referring to FIG. 17, 8 bits 1700, 1701, 1702, 1703, 1704, 1705, 1706, and 1707 of a first byte of an NBT long BSR MAC CE may be interpreted as bitmaps corresponding to 8 LCGs from LCG ID 7 1700 to LCG ID 0 1707, respectively. In an embodiment, the fact that a specific bit among the 8 bits has been configured to be 1 1761 may indicate that there exists, in the NBT long BSR MAC CE, a buffer size field for reporting an uplink buffer size of an LCG corresponding to the bit configured to be 1. In this case, the fact that a specific bit among the 8 bits has been configured to be 0 1760 may indicate that there exists no buffer size field for reporting an uplink buffer size of an LCG corresponding to the bit configured to be 0 in the NBT long BSR MAC CE.

Bytes remaining after excluding the first byte of the NBT long BSR MAC CE may include one or multiple buffer size fields. When configuring buffer size fields for an LCG previously indicated or allowed to refer to an NBT by the base station via RRC or MAC CE, T fields 1710 and 1740 may be added in front of buffer size fields 1711, 1720, and 1741 of the LCG. The T fields 1710 and 1740 may be used to indicate which buffer size table is referred to by the buffer size fields 1711, 1720, and 1741 of the LCG.

For example, the T field may have a length of 1 bit. In this case, one of two values of the T field may indicate that a subsequent buffer size field refers to a buffer size table for long BSR. In addition, the other of the two values of the T field may indicate that the buffer size field refers to an NBT. In this case, a length of a buffer size field may be determined by the value of the T field. Of course, the length of the T field is not limited to the example above.

If the T field 1740 indicates that the buffer size table for long BSR is referenced, 7 bits 1741 remaining after excluding the T field 1740 may be allocated to the buffer size field. If the T field 1710 indicates that the NBT is referenced, 7 bits 1711 remaining after excluding the T field 1710 and the subsequent bytes 1720 are combined so that a total of 15 bits may be allocated to the buffer size field.

In this case, the number of indexes for each buffer size interval defined by the NBT may be fewer than or equal to 2¹⁵. For other LCGs, except for the LCG previously indicated or allowed to refer to the NBT by the base station via RRC or MAC CE, corresponding buffer size fields 1730 and 1750 may always have a length of 1 byte. In this case, the LCGs may always refer to the buffer size table for long BSR. The length of the T field may be longer than 1 bit. In this case, the different values, which the T field may have, may be used to indicate which table among multiple NBTs and buffer size tables for long BSR is each buffer size table that is being referenced. In this case, the buffer size field of the LCG for which use of the NBT has been indicated or allowed may have 16-(T_length) bits. T_length may indicate the length of the T field in unit of bits. In addition, the NBT may have up to 2^{16-(T_length)}indexes for each buffer size interval.

In another embodiment, one of the values, which the T field may have, may indicate that an immediately subsequent buffer size field directly indicates an uplink buffer size in bytes without referring to a specific NBT. In this case, the uplink buffer size that can be indicated by the buffer size may be from 0 to (2^{16-T_length} - 1) bytes.

The UE may report the uplink buffer size to the base station in more detail by directly expressing the uplink buffer size in bytes or by referring to the NBT that defines more detailed buffer size intervals than the existing buffer size table for long BSR by using the NBT long BSR MAC CE format.

If the NBT long BSR MAC CE includes multiple buffer size fields, an arrangement order of the buffer size fields may be determined by referring to priority levels of corresponding LCGs. For example, the LCGs may be arranged in order from an LCG with a highest priority level to an LCG with a lowest priority level. A priority level of an LCG may be configured to be a highest priority level among priority levels of LCHs included in the LCG.

In the NBT long BSR MAC CE, a buffer size table to be referenced when configuring a buffer size field of a specific LCG may be determined by an NBT-related configuration configured by the base station in advance via RRC or MAC CE. In addition, the UE may configure and set the buffer size field of the LCG by referring to an NBT only when an uplink buffer size of the LCG is larger than or equal to a specific threshold value configured by the base station. If the uplink buffer size of the specific LCG is not large, the UE may reduce signaling overhead of the NBT long BSR MAC CE by limiting a length of the buffer size field without performance degradation, by referencing of a buffer size table for long BSR instead of the NBT.

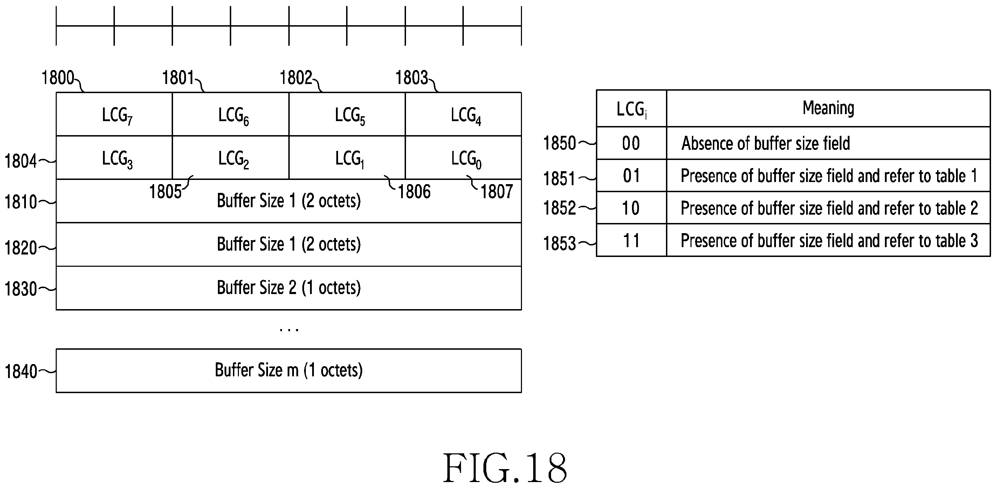

FIG. 18 is a diagram illustrating an NBT long BSR MAC CE format that may be used when a UE reports an uplink buffer size to a base station by referring to an NBT according to an embodiment of the disclosure.

Referring to FIG. 18, first two bytes of an NBT long BSR MAC CE may be divided into consecutive 2 bits and used as 8 LCG-specific indicators 1800, 1801, 1802, 1803, 1804, 1805, 1806, and 1807. Each LCG-specific 2-bit indicator may indicate a total of four cases. One 1850 of the four cases may indicate that the NBT long BSR MAC CE does not have a buffer size field for a corresponding LCG.

The remaining three cases of the four cases may be used when a buffer size field for a corresponding LCG exists. Each of the three cases 1851, 1852, and 1853 may be used to indicate that a specific table among three buffer size tables is referenced. For example, one of the three buffer size tables may be a buffer size table for long BSR. For example, the other two of the three buffer size tables may indicate different NBTs. In this case, the two different NBTs may include the same number of indexes for each buffer size interval or may include different numbers of indexes for each buffer size interval.

Referring to FIG. 18, a space remaining after excluding the first two bytes of the NBT long BSR MAC CE may include one or multiple buffer size fields. In this case, the presence or absence of a buffer size field for each LCG may be derived by the LCG-specific 2-bit indicator. A length of the buffer size field for each LCG may be determined by which buffer size table is being referenced by the LCG.

For example, if a buffer size table being referenced by a specific LCG is a buffer size table for long BSR, corresponding buffer size fields 1830 and1840 may have a length of 1 byte. For example, if a buffer size table referenced by a specific LCG is an NBT, and the number of indexes for each buffer size interval included in the NBT is 2^{L}, a buffer size field may have a length of L bits. L may be 8 or 16 or a value larger than 16. Of course, the disclosure is not limited to the example above.

In addition, according to an embodiment, the buffer size field may directly indicate an uplink buffer size in bytes without referring to a specific NBT. In this case, the direct reporting of the uplink buffer size via the buffer size field may be signaled via a 2-bit indicator of the LCG. In this case, the uplink buffer size that can be indicated by the buffer size may be from 0 to (2^{L} - 1) bytes. L may be equal to the length of the buffer size field, which is L bits.

In the NBT long BSR MAC CE, which table is a buffer size table referenced by each LCG may be determined by an NBT-related configuration configured in advance by the base station via RRC or MAC CE. In addition, the UE may determine by itself a buffer size table to be referenced, based on the uplink buffer size of the LCG. In addition, a buffer size table to be referenced may be determined by a threshold configured by the base station.

For example, only if an uplink buffer size of an LCG, which the base station has allowed to refer to an NBT, is greater than or equal to a specific threshold configured by the base station, the uplink buffer size of the LCG may be reported by referring to the NBT. If the uplink buffer size of the specific LCG is not large, the UE may reduce signaling overhead of the NBT long BSR MAC CE by limiting a length of the buffer size field without performance degradation, by referencing of a buffer size table for long BSR instead of the NBT.

The UE may report the uplink buffer size to the base station in more detail by directly expressing the uplink buffer size in bytes or by referring to the NBT that defines more detailed buffer size intervals than the existing buffer size table for long BSR by using the NBT long BSR MAC CE format.

If the NBT long BSR MAC CE includes multiple buffer size fields, an arrangement order of the buffer size fields may be determined by referring to priority levels of corresponding LCGs. For example, the LCGs may be arranged in order from an LCG with a highest priority level to an LCG with a lowest priority level. A priority level of an LCG may be configured to be a highest priority level among priority levels of LCHs included in the LCG.

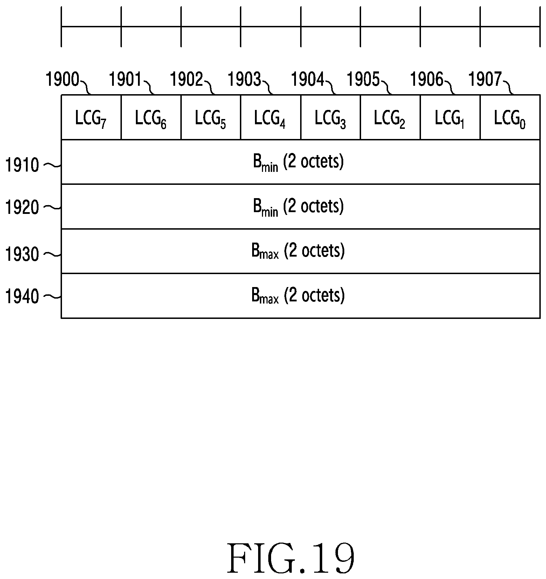

FIG. 19 is a diagram illustrating an NBT MAC CE format transmitted to a base station in order to change an NBT-related configuration of a UE according to an embodiment of the disclosure.

Referring to FIG. 19, the NBT MAC CE may include at least one piece of information below.
- A bitmap that expresses whether each LCG refers to (or is allowed to refer to) an NBT may be included. For the bitmap, 1 bit may be allocated for each LCG, and whether an LCG should refer to (or is allowed to refer to) an NBT may be indicated by bit 0 or 1.
- Among upper or lower limits of each buffer size interval defined in the NBT, a minimum upper limit or lower limit Bₘᵢₙ value itself, except for 0, may be included, or an index corresponding to Bₘᵢₙ in a predefined table may be included. A value corresponding to Bₘᵢₙ may be indicated using a 2-byte field. A value corresponding to Bₘᵢₙ may be indicated using a 1-byte field. A value corresponding to Bₘᵢₙ may be indicated using a field longer than 2 bytes. Of course, a length of a Bₘᵢₙ field is not limited to the example above.
- Among the upper or lower limits of each buffer size interval defined in the NBT, a largest value Bₘₐₓ may be directly included or an index corresponding to Bₘₐₓ in the predefined table may be included. A value corresponding to Bₘₐₓ may be indicated using a 1-byte or 2-byte field or a field longer than 2 bytes. Of course, a length of a Bₘᵢₙ field is not limited to the example above.

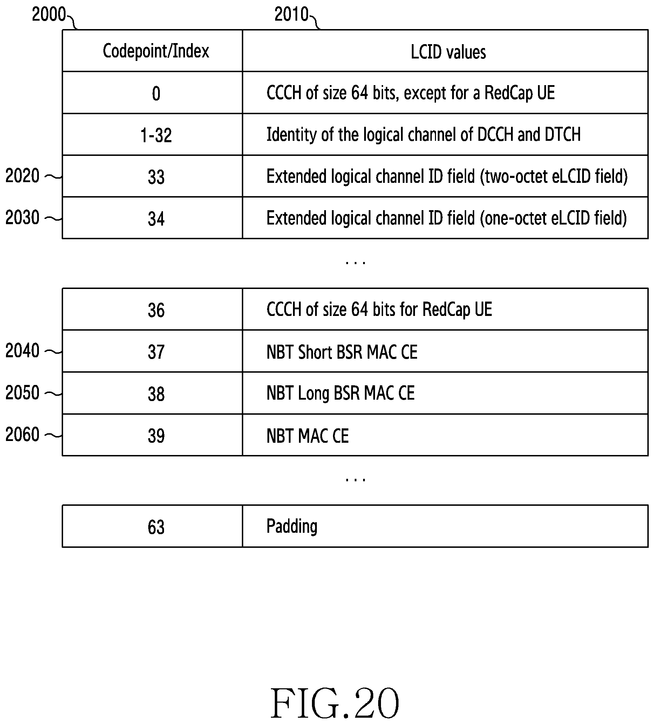

FIG. 20 is a diagram for assignment of a new LCID for a new MAC CE proposed in the disclosure according to an embodiment of the disclosure.

Referring to FIG. 20, three reserved values (e.g., 37, 38, and 39) among LCID codepoints used in the NR system may be allocated to indicate an NBT short BSR MAC CE 2040, an NBT long BSR MAC CE 2050, and an NBT MAC CE 2060, respectively. In this case, since the NBT short BSR MAC CE 2040 and the NBT MAC CE 2060 may have a fixed length, a MAC subheader including R 700, F 705, and LCID 710 may be attached as described in FIG. 7, and a codepoint corresponding to the LCID 710 may be displayed.

Since the NBT long BSR MAC CE 2050 may have a variable length, a MAC subheader including R 735, F 740, LCID 745, and L 750 may be attached as described in FIG. 7. In this case, a codepoint of the MAC CE may be indicated by the LCID 745, and a length of the MAC CE may be indicated by L 750.

The codepoint value of FIG. 20 is not necessarily limited to a specific value, which corresponds to an example, and is not limited to the value of FIG. 20. In addition, the feature of the disclosure is to indicate an NBT short BSR MAC CE, an NBT long BSR MAC CE, and an NBT MAC CE via a specific codepoint/index.

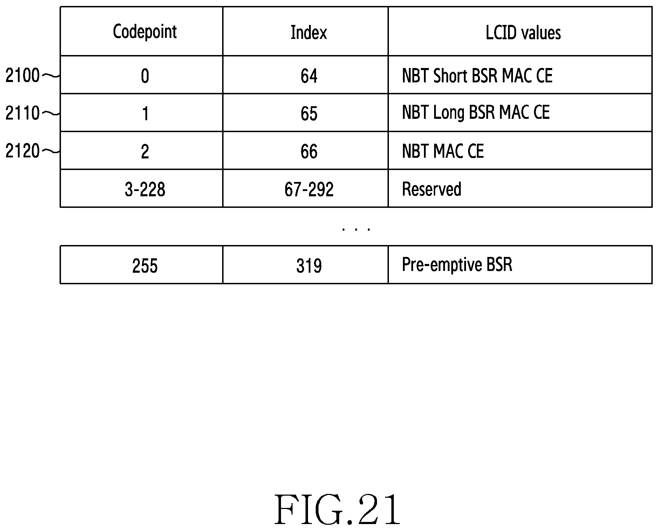

FIG. 21 is a diagram illustrating an example of assigning a new eLCID to a newly defined MAC CE according to an embodiment of the disclosure.

Referring to FIG. 21, three reserved values (e.g., 0, 1, and 2) among eLCID codepoints used in the NR system may be allocated to indicate an NBT short BSR MAC CE 2100, an NBT long BSR MAC CE 2120, and an NBT MAC CE 2120, respectively. In this case, since the NBT short BSR MAC CE 2100 and the NBT MAC CE 2120 may have a fixed length, a MAC subheader including R 715, F 720, LCID 725, and eLCID 730 may be attached as described in FIG. 7. In this case, the presence or absence of the eLCID 730 and a length thereof may be indicated by the LCID 725, and a codepoint corresponding to a corresponding MAC CE may be indicated by the eLCID 730.

Since the NBT long BSR MAC CE 2110 may have a variable length, a MAC subheader including R 755, F 760, LCID 765, eLCID 770, and L 775 may be attached as described in FIG. 7. In this case, a codepoint corresponding the MAC CE may be indicated by the eLCID 770, and a length of the MAC CE may be indicated by L 775.

As shown in FIG. 21, relationships between codepoints, indexes, and LCIDs may be indicated. Codepoint values are not necessarily limited to the index values and LCID information of FIG. 21, and these correspond to examples. The features of the disclosure are that a specific codepoint matches a specific index, and the specific codepoint and index indicate an LCID, such as an NBT short BSR MAC CE, an NBT long BSR MAC CE, and an NBT MAC CE.

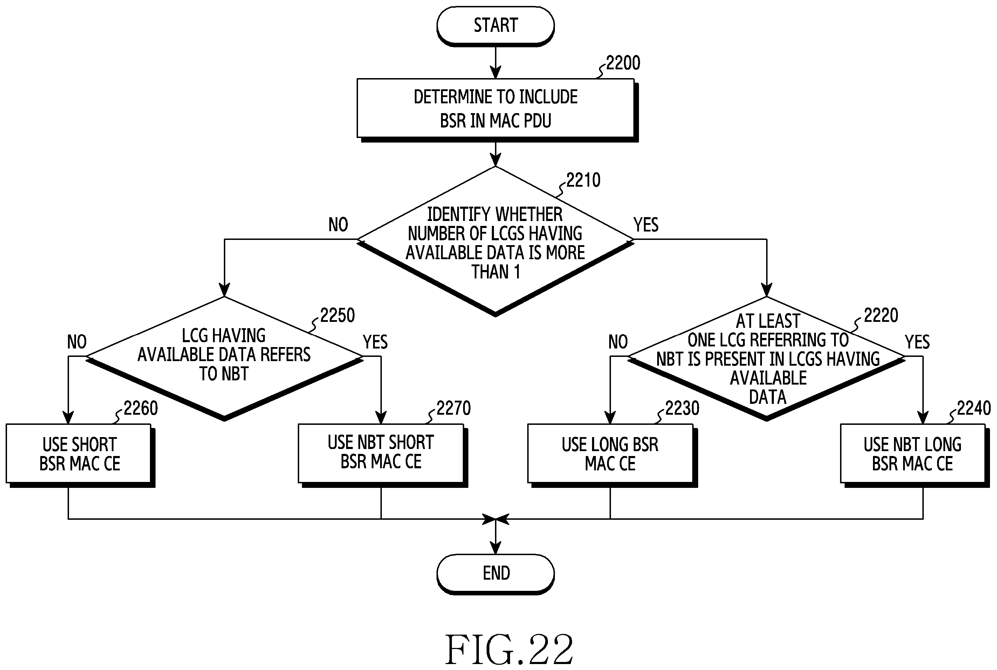

FIG. 22 is a diagram illustrating a method in which a UE reports an uplink buffer size by referring to an NBT according to an embodiment of the disclosure.

Referring to FIG. 22, a UE may determine 2200 to include a BSR in a MAC PDU during configuration of the MAC PDU. If the UE determines to include the BSR in the MAC PDU, the UE may identify 2210 whether the number of LCGs having available data among LCGs of the UE is more than 1.

If the number of LCGs having available data among the LCGs is 1, the UE may identify 2250 whether the LCG having available data refers to an NBT when reporting an uplink buffer size. If the LCG having available data refers to an NBT when reporting the uplink buffer size, the UE may apply 2270 an NBT short BSR MAC CE format to the BSR. If the LCG having available data refers to a buffer size table for short BSR when reporting the uplink buffer size, the UE may apply 2260 a short BSR MAC CE format to the BSR.

Referring to FIG. 22, if the number of LCGs having available data is more than 1, the UE may identify 2220 whether there is at least one LCG, which refers to an NBT when reporting the uplink buffer size, among the LCGs having available data. If there is at least one LCG, which refers to an NBT when reporting the uplink buffer size, among the LCGs having available data, the UE may apply 2240 an NBT long BSR MAC CE format as a BSR format. If there is no LCG, which refers to an NBT when reporting the uplink buffer size, among the LCGs having available data, the UE may apply 2230 a long BSR MAC CE format as a BSR format.

According to an embodiment of the disclosure, whether a specific LCG refers to an NBT when reporting an uplink buffer size may be determined by an NBT-related configuration configured in advance by a base station via RRC or MAC CE. In addition, the UE may determine whether to reference an NBT by additionally considering whether the uplink buffer size of the LCG is larger than a threshold configured in advance by the base station.

In an embodiment of the disclosure, logical channel priorities of the NBT long BSR and the NBT short BSR may be defined in the following order. Of course, the disclosure is not limited to the following examples.
- MAC CE for C-RNTI, or data from UL-CCCH;
- MAC CE for (Enhanced) BFR, or MAC CE for Configured Grant Confirmation, or MAC CE for Multiple Entry Configured Grant Confirmation;
- MAC CE for Sidelink Configured Grant Confirmation;
- MAC CE for LBT failure;
- MAC CE for Timing Advance Report;
- MAC CE for SL-BSR prioritized according to clause 5.22.1.6;
- MAC CE for (Extended) BSR, with exception of BSR included for padding;
- MAC CE for (Enhanced) Single Entry PHR, or MAC CE for (Enhanced) Multiple Entry PHR;
- MAC CE for Positioning Measurement Gap Activation/Deactivation Request;
- MAC CE for the number of Desired Guard Symbols;
- MAC CE for Case-6 Timing Request;
- MAC CE for (Extended) Pre-emptive BSR;
- MAC CE for SL-BSR, with exception of SL-BSR prioritized according to clause 5.22.1.6 and SL-BSR included for padding;
- MAC CE for IAB-MT Recommended Beam Indication, or MAC CE for Desired IAB-MT PSD range, or MAC CE for Desired DL Tx Power Adjustment;
- data from any Logical Channel, except data from UL-CCCH;
- MAC CE for NBT Long/Short BSR, with exception of included for padding;
- MAC CE for Recommended bit rate query;
- MAC CE for BSR included for padding;
- MAC CE for SL-BSR included for padding.

According to an embodiment of the disclosure, the NBT long/short BSR and the long/short BSR may be included in the same MAC PDU at the same time as complementary. Of course, the disclosure is not limited to the example above. The NBT long/short BSR may have a logical channel priority lower than that of data from any logical channel, except for data from a UL-CCCH. When the NBT long/short BSR and the long/short BSR are included in the same MAC PDU at the same time, an uplink buffer size of an LCG reported in the NBT long/short BSR may be reported to the base station, based on a buffer size field value of the NBT long/short BSR.

According to an embodiment of the disclosure, the logical channel priority of the NBT long/short BSR may be equal to that of a MAC CE for an (extended) BSR, with an exception of a BSR included for padding.

According to an embodiment of the disclosure, logical channel priorities of data of the LCG reported via the NBT long/short BSR may be configured as in the following example. Of course, the disclosure is not limited to the following examples. The logical channel priorities of data of the LCG reported via the NBT long/short BSR may be in a specific position between a MAC CE for BFR and the MAC CE for an (extended) BSR, with an exception of a BSR included for padding.
- MAC CE for C-RNTI, or data from UL-CCCH;
- MAC CE for (Enhanced) BFR, or MAC CE for Configured Grant Confirmation, or MAC CE for Multiple Entry Configured Grant Confirmation;
- MAC CE for Sidelink Configured Grant Confirmation;
- MAC CE for LBT failure;
- MAC CE for Timing Advance Report;
- data from any LCG reported in NBT Long/Short BSR
- MAC CE for SL-BSR prioritized according to clause 5.22.1.6;
- MAC CE for (Extended) BSR, with exception of BSR included for padding;
- MAC CE for (Enhanced) Single Entry PHR, or MAC CE for (Enhanced) Multiple Entry PHR;
- MAC CE for Positioning Measurement Gap Activation/Deactivation Request;
- MAC CE for the number of Desired Guard Symbols;
- MAC CE for Case-6 Timing Request;
- MAC CE for (Extended) Pre-emptive BSR;
- MAC CE for SL-BSR, with exception of SL-BSR prioritized according to clause 5.22.1.6 and SL-BSR included for padding;
- MAC CE for IAB-MT Recommended Beam Indication, or MAC CE for Desired IAB-MT PSD range, or MAC CE for Desired DL Tx Power Adjustment;
- data from any Logical Channel, except data from UL-CCCH;
- MAC CE for Recommended bit rate query;
- MAC CE for BSR included for padding;
- MAC CE for SL-BSR included for padding.

According to an embodiment of the disclosure, the logical channel priorities of the NBT long/short BSR may be defined in the following order. Of course, the disclosure is not limited to the following examples.
- MAC CE for C-RNTI, or data from UL-CCCH;
- MAC CE for (Enhanced) BFR, or MAC CE for Configured Grant Confirmation, or MAC CE for Multiple Entry Configured Grant Confirmation;
- MAC CE for Sidelink Configured Grant Confirmation;
- MAC CE for LBT failure;
- MAC CE for Timing Advance Report;
- MAC CE for NBT Long/Short BSR, with exception of included for padding;
- MAC CE for SL-BSR prioritized according to clause 5.22.1.6;
- MAC CE for (Extended) BSR, with exception of BSR included for padding;
- MAC CE for (Enhanced) Single Entry PHR, or MAC CE for (Enhanced) Multiple Entry PHR;
- MAC CE for Positioning Measurement Gap Activation/Deactivation Request;
- MAC CE for the number of Desired Guard Symbols;
- MAC CE for Case-6 Timing Request;
- MAC CE for (Extended) Pre-emptive BSR;
- MAC CE for SL-BSR, with exception of SL-BSR prioritized according to clause 5.22.1.6 and SL-BSR included for padding;
- MAC CE for IAB-MT Recommended Beam Indication, or MAC CE for Desired IAB-MT PSD range, or MAC CE for Desired DL Tx Power Adjustment;
- data from any Logical Channel, except data from UL-CCCH;
- MAC CE for Recommended bit rate query;
- MAC CE for BSR included for padding;
- MAC CE for SL-BSR included for padding.

According to an embodiment of the disclosure, the logical channel priorities of uplink data of the LCG reported via the NBT long/short BSR and the NBT long/short BSR may be configured as in the following example. Of course, the disclosure is not limited to the following examples.
- MAC CE for C-RNTI, or data from UL-CCCH;
- MAC CE for (Enhanced) BFR, or MAC CE for Configured Grant Confirmation, or MAC CE for Multiple Entry Configured Grant Confirmation;
- MAC CE for Sidelink Configured Grant Confirmation;
- MAC CE for LBT failure;
- MAC CE for Timing Advance Report;
- MAC CE for NBT Long/Short BSR, with exception of included for padding;
- data from any LCG reported in NBT Long/Short BSR
- MAC CE for SL-BSR prioritized according to clause 5.22.1.6;
- MAC CE for (Extended) BSR, with exception of BSR included for padding;
- MAC CE for (Enhanced) Single Entry PHR, or MAC CE for (Enhanced) Multiple Entry PHR;
- MAC CE for Positioning Measurement Gap Activation/Deactivation Request;
- MAC CE for the number of Desired Guard Symbols;
- MAC CE for Case-6 Timing Request;
- MAC CE for (Extended) Pre-emptive BSR;
- MAC CE for SL-BSR, with exception of SL-BSR prioritized according to clause 5.22.1.6 and SL-BSR included for padding;
- MAC CE for IAB-MT Recommended Beam Indication, or MAC CE for Desired IAB-MT PSD range, or MAC CE for Desired DL Tx Power Adjustment;
- data from any Logical Channel, except data from UL-CCCH;
- MAC CE for Recommended bit rate query;
- MAC CE for BSR included for padding;
- MAC CE for SL-BSR included for padding.

According to an embodiment of the disclosure, an NBT long BSR/NBT long truncated BSR and a long BSR/long truncated BSR are the same MAC CE format but may have different LCIDs/eLCIDs. For example, 8 bits of a first byte of an NBT long BSR/NBT long truncated BSR may be used as an indicator indicating whether a buffer size field corresponding to each of LCGs from LCG 7 to LCG 0 exist in the NBT long BSR/NBT long truncated BSR.

In addition, according to an embodiment, a buffer size field length of the NBT long BSR/NBT long truncated BSR may be 8 bits, similar to the long BSR/long truncated BSR. For example, the NBT long BSR/NBT long truncated BSR may include buffer size fields corresponding to LCGs in which bits in the first byte are configured to be 1. For example, when multiple buffer size fields are included in the NBT long BSR/NBT long truncated BSR, an arrangement order of the buffer size fields may be determined in an ascending order manner based on LCGᵢ (LCGᵢ indicates logical channel group i).

In addition, according to an embodiment, in the NBT long BSR/NBT long truncated BSR/long BSR/long truncated BSR, the base station may identify (or distinguish) a MAC CE transmitted via the UE, based in different LCIDs or different eLCIDs of MAC subheaders of the MAC CEs.

According to an embodiment, the NBT long BSR/NBT long truncated BSR may include only LCGs reporting a buffer size by referring to an NBT, so as to be used to report buffer sizes of the LCGs. For example, when a specific LCG is enabled/ allowed to refer to an NBT by an RRC or MAC CE configuration of the base station, if a buffer size field of the LCG is configured by referring to the NBT, the UE may report the buffer size field of the LCG by including the same in the NBT long BSR/NBT long truncated BSR. Conversely, if the buffer size field of the LCG is configured by referring to a legacy BS table (e.g., corresponding to table 6.1.3.1-2 of TS 38.321), the buffer size field of the LCG may be reported via the long BSR/long truncated BSR. For example, other LCGs, except for the LCG enabled/allowed to refer to the NBT by the RRC or MAC CE configuration of the base station, may refer to only the legacy BS table. Of course, the disclosure is not limited to the example above, the LCG enabled to refer to the NBT and the LCG enabled to refer to the legacy BS table may be separately configured, and both the LCGs may refer to the NBT and the legacy BS table.

According to an embodiment of the disclosure, when a buffer size field of a specific LCG is reported via the NBT long BSR/NBT long truncated BSR, the base station may interpret the buffer size field of the LCG by referring to an NBT. Conversely, if the buffer size field of the specific LCG is reported via the long BSR/long truncated BSR, the base station may interpret the buffer size field of the LCG by referring to the legacy BS table (e.g., corresponding to table 6.1.3.1-2 of TS 38.321).

For example, for an LCG enabled/allowed to refer to an NBT via an RRC configuration or MAC CE of the base station, if a buffer size of the LCG belongs to a buffer size range covered by/included in the NBT, the UE may report the buffer size by referring to the NBT. Conversely, if the buffer size of the LCG does not belong to the buffer size range covered by/included in the NBT, the UE may refer to the legacy BS table (e.g., corresponding to table 6.1.3.1-2 of TS 38.321) when reporting the buffer size of the LCG.

According to an embodiment of the disclosure, after a regular or periodic BSR is triggered, when a specific MAC PDU includes a BSR, the UE may operate as follows.
- If logicalChannelGroup-IAB-Ext is not configured in a corresponding MAC entity by a higher layer:
   -- If two or more LCGs have available data when the MAC PDU including the BSR is created:
      --- If one or more LCGs referring to an NBT is included in the LCGs having available data:
         ---- Via an NBT long BSR, reporting buffer sizes of all the LCGs referring to the NBT among the LCGs having available data
      --- If there is one LCGreferring to a legacy BS table among the LCGs having available data:
         ---- Option 1: reporting a buffer size of the LCG via a short BSR
         ---- Option 2: reporting a buffer size of the LCG via a long BSR
      --- If there are two or more LCGs referring to a legacy BS table among the LCGs having available data:
         ---- Via a long BSR, reporting buffer sizes of all the LCGs referring to the legacy BS table among the LCGs having available data
   -- Other cases:
      --- If there is one LCG having available data and the LCG refers to an NBT:
         ---- Reporting a buffer size of the LCG via an NBT long BSR
      --- If there is one LCG having available data and the LCG refers to a legacy BS table:
         ---- If the LCG is an LCG enabled/allowed to refer to the NBT:
            ----- Option 1: reporting a buffer size of the LCG via a long BSR
            ----- Option 2: reporting a buffer size of the LCG via a short BSR
         ---- If the LCG is not an LCG enabled/allowed to refer to the NBT:
            ----- Option 1: reporting a buffer size of the LCG via a short BSR
            ----- Option 2: reporting a buffer size of the LCG via a long BSR

For example, if one or more LCGs among the LCGs having available data refer to the legacy BS table, and one or more LCGs refer to the NBT at the same time, the MAC PDU may include both of one legacy BSR (long BSR, long truncated BSR, short BSR, short truncated BSR, etc.) and one NBT BSR (NBT long BSR, NBT long truncated BSR, NBT short BSR, NBT short truncated BSR, etc.).

For example, if one legacy BSR (long BSR, long truncated BSR, short BSR, short truncated BSR, etc.) and one NBT BSR (NBT long BSR, NBT long truncated BSR, NBT short BSR, NBT short truncated BSR, etc.) are included in the same MAC PDU, buffer size reporting for a specific LCG may be included in only one of the two BSRs, based on the referenced BS table.

For example, the NBT long BSR may include only one buffer size field for the LCG.

For example, index/codepoint 0 of the NBT may be designed to indicate the absence of available data in a buffer.

For example, the number of buffer size fields included in the NBT long BSR may be 0.

For example, for a long BSR and an NBT long BSR which reflect all BSR trigger events before MAC PDU assembly, if the MAC PDU includes 1) only the long BSR without the NBT long BSR, 2) includes only the NBT long BSR without the long BSR, or 3) includes both the long BSR and the NBT long BSR, all the BSRs triggered before the MAC PDU assembly may be canceled.

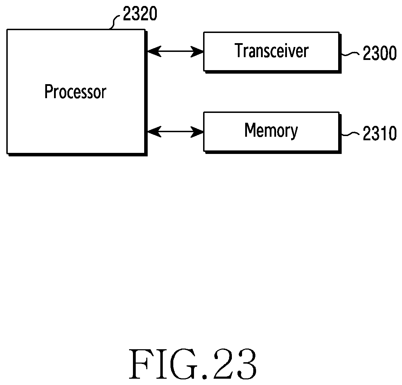

FIG. 23 illustrates a UE device according to an embodiment of the disclosure.

As illustrated in FIG. 23, a UE of the disclosure may include a processor 2320, a transceiver 2300, and a memory 2310. However, components of the UE are not limited to the above-described example. For example, the UE may include a larger or smaller number of components than the above-described components. In addition, the processor 2320, the transceiver 2300, and the memory 2310 may be implemented in the form of a single chip.

According to an embodiment of the disclosure, the processor 2320 may control a series of processes in which the UE can operate according to the above-described embodiments of the disclosure. For example, the processor 2320 may control the components of the UE in order to perform the buffer status reporting methods according to the above-described embodiments. The processor 2320 may control the components of the UE to perform the embodiments of the disclosure by executing the programs stored in the memory 2310. In addition, the processor 2320 may be an application processor (AP), a communication processor (CP), a circuit, an application -specific circuit, or at least one processor.

According to an embodiment of the disclosure, the transceiver 2300 may transmit/receive signals with network entities, other UEs, or base stations. The signals transmitted/received with network entities, other UEs, or base stations may include control information and data. The transceiver 2300 may include an RF transmitter configured to up-convert and amplify the frequency of transmitted signals, an RF receiver configured to low-noise-amplify received signals and down-convert the frequency thereof, and the like. However, this is only an embodiment of the transceiver 2300, and the components of the transceiver 2300 are not limited to the RF transmitter and the RF receiver. In addition, the transceiver 2300 may receive signals through a radio channel, output the same to the processor 2320, and transmit signals output from the processor 2320 through the radio channel.

According to an embodiment of the disclosure, the memory 2310 may store programs and data necessary for operations of the UE. In addition, the memory 2310 may store control information or data included in signals transmitted/received by the UE. The memory 2310 may include a storage medium such as a ROM, a RAM, a hard disk, a CD-ROM, or a DVD, or a combination of storage media. In addition, the memory 2310 may include multiple memories. Furthermore, according to an embodiment, the memory 2310 may store programs for executing the above-described buffer status reporting methods.

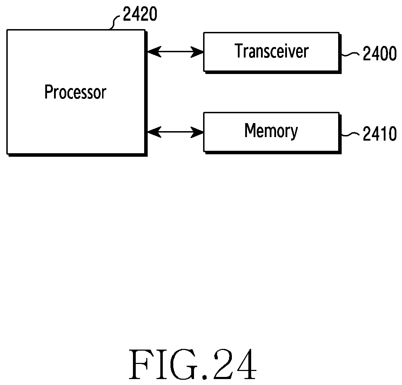

FIG. 24 illustrates a base station device according to an embodiment of the disclosure.

As illustrated in FIG. 24, a base station of the disclosure may include a processor 2420, a transceiver 2400, and a memory 2410. However, components of the base station are not limited to the above-described example. For example, the base station may include a larger or smaller number of components than the above-described components. In addition, the processor 2420, the transceiver 2400, and the memory 2410 may be implemented in the form of a single chip.

According to an embodiment of the disclosure, the processor 2420 may control a series of processes in which the base station can operate according to the above-described embodiments of the disclosure. For example, the processor 2420 may control the components of the base station in order to perform the buffer status reporting methods according to the above-described embodiments. The processor 2420 may control the components of the base station to perform the embodiments of the disclosure by executing programs stored in the memory 2410. In addition, the processor 2420 may be an application processor (AP), a communication processor (CP), a circuit, an application -specific circuit, or at least one processor.

According to an embodiment of the disclosure, the transceiver 2400 may transmit/receive signals with network entities, other base stations, or UEs. The signals transmitted/received with network entities, other base stations, or UEs may include control information and data. The transceiver 2400 may include an RF transmitter configured to up-convert and amplify the frequency of transmitted signals, an RF receiver configured to low-noise-amplify received signals and down-convert the frequency thereof, and the like. However, this is only an embodiment of the transceiver 2400, and the components of the transceiver 2400 are not limited to the RF transmitter and the RF receiver. In addition, the transceiver 2400 may receive signals through a radio channel, output the same to the processor 2420, and transmit signals output from the processor 2420 through the radio channel.

According to an embodiment of the disclosure, the memory 2410 may store programs and data necessary for operations of the base station. In addition, the memory 2410 may store control information or data included in signals transmitted/received by the base station. The memory 2410 may include a storage medium such as a ROM, a RAM, a hard disk, a CD-ROM, or a DVD, or a combination of storage media. In addition, the memory 2410 may include multiple memories. Furthermore, according to an embodiment, the memory 2410 may store programs for executing the above-described buffer status reporting methods.

According to an embodiment of the disclosure, a method for providing a buffer status report (BSR) of a UE in a wireless communication system may include: receiving, from a base station, a radio resource control (RRC) reconfiguration message including information on a buffer size table type that each logical channel group (LCG) may refer to; identifying whether a BSR is triggered; in response to triggering of the BSR, generating a BSR media access control (MAC) control element (CE) based on the RRC reconfiguration message; and transmitting the BSR MAC CE to the base station, wherein the BSR MAC CE includes information indicating the buffer size table type that each LCG refers to.

The buffer size table type may include a first type buffer size table and a second type buffer size table, and the first type buffer size table and the second type buffer size table may differ from each other in at least one of a maximum value or a minimum value indicating an amount of data in a buffer, or an interval indicating an amount of data corresponding to each index.

The buffer size table type referred to by each LCG may be determined based on a buffer size of the each LCG.

The method may further include: receiving, from the base station, a UECapabilityEnquiry message for inquiring of whether the UE is able to use the first type buffer size table; and transmitting, to the base station, a UECapabilityInformattion message including information on whether the UE is able to use the first type buffer size table.

The information indicating the buffer size table type may be included in an LCG identification (ID) field or a buffer size table type field in the BSR MAC CE.

According to an embodiment of the disclosure, a method for acquiring a buffer status report (BSR) of a base station may include: transmitting, to a UE, a radio resource control (RRC) reconfiguration message including information on a buffer size table type that each logical channel group (LCG) may refer to; and receiving, from the UE, a BSR media access control (MAC) control element (CE) based on the RRC reconfiguration message, wherein the BSR MAC CE includes information indicating the buffer size table type that the each LCG refers to.

The buffer size table type may include a first type buffer size table and a second type buffer size table, and the first type buffer size table and the second type buffer size table may differ from each other in at least one of a maximum value or a minimum value indicating an amount of data in a buffer, or an interval indicating an amount of data corresponding to each index.

The buffer size table type referred to by the each LCG may be determined based on a buffer size of the each LCG.

According to an embodiment of the disclosure, a UE for providing a buffer status report (BSR) may include a transceiver, and at least one processor coupled with the transceiver, wherein the at least one processor is configured to: receive, from a base station, a radio resource control (RRC) reconfiguration message including information on a buffer size table type that each logical channel group (LCG) may refer to; identify whether a BSR is triggered; in response to triggering of the BSR, generate a BSR media access control (MAC) control element (CE) based on the RRC reconfiguration message; and transmit the BSR MAC CE to the base station, wherein the BSR MAC CE includes information indicating the buffer size table type that the each LCG refers to.

The buffer size table type may include a first type buffer size table and a second type buffer size table, and the first type buffer size table and the second type buffer size table may differ from each other in at least one of a maximum value or a minimum value indicating an amount of data in a buffer, or an interval indicating an amount of data corresponding to each index.

The buffer size table type referred to by the each LCG may be determined based on a buffer size of the each LCG.

The at least one processor may be configured to: receive, from the base station, a UECapabilityEnquiry message for inquiring of whether the UE is able to use the first type buffer size table; and transmit, to the base station, a UECapabilityInformattion message including information on whether the UE is able to use the first type buffer size table.

The information indicating the buffer size table type may be included in an LCG identification (ID) field or a buffer size table type field in the BSR MAC CE.

According to an embodiment of the disclosure, a base station for acquiring a buffer status report (BSR) may include a transceiver, and at least one processor coupled with the transceiver, wherein the at least one processor is configured to: transmit, to a UE, a radio resource control (RRC) reconfiguration message including information on a buffer size table type that each logical channel group (LCG) may refer to; and receive, from the UE, a BSR media access control (MAC) control element (CE) based on the RRC reconfiguration message, wherein the BSR MAC CE includes information indicating the buffer size table type that the each LCG refers to.

The buffer size table type may include a first type buffer size table and a second type buffer size table, and the first type buffer size table and the second type buffer size table may differ from each other in at least one of a maximum value or a minimum value indicating an amount of data in a buffer, or an interval indicating an amount of data corresponding to each index.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. In addition, the embodiments of the disclosure may be applied to other communication systems and other variants based on the technical idea of the embodiments may also be implemented.

## Claims

1. A method for providing a buffer status report (BSR) by a terminal, the method comprising:
receiving, from a base station, a radio resource control (RRC) reconfiguration message comprising information on a buffer size table type that each logical channel group (LCG) can refer to;
identifying whether a BSR is triggered;
in response to triggering of the BSR, generating a BSR media access control (MAC) control element (CE), based on the RRC reconfiguration message; and
transmitting the BSR MAC CE to the base station,
wherein the BSR MAC CE comprises information indicating the buffer size table type that the each LCG refers to.

2. The method of claim 1, wherein the buffer size table type comprises a first type buffer size table and a second type buffer size table, and
wherein the first type buffer size table and the second type buffer size table differ from each other in at least one of a maximum value or a minimum value indicating an amount of data in a buffer, or an interval indicating an amount of data corresponding to each index.

3. The method of claim 1, wherein the buffer size table type referred to by the each LCG is determined based on a buffer size of the each LCG.

4. The method of claim 1, further comprising:
receiving, from the base station, a UECapabilityEnquiry message inquiring of whether the terminal has capability to use the first type buffer size table; and
transmitting, to the base station, a UECapabilityInformattion message comprising information on whether the terminal has capability to use the first type buffer size table.

5. The method of claim 1, wherein the information indicating the buffer size table type is included in an LCG identification (ID) field or a buffer size table type field in the BSR MAC CE.

6. A method for acquiring a buffer status report (BSR) by a base station, the method comprising:
transmitting, to a terminal, a radio resource control (RRC) reconfiguration message comprising information on a buffer size table type that each logical channel group (LCG) can refer to; and
receiving, from the terminal, a BSR media access control (MAC) control element (CE) based on the RRC reconfiguration message,
wherein the BSR MAC CE comprises information indicating the buffer size table type that the each LCG refers to.

7. The method of claim 6, wherein the buffer size table type comprises a first type buffer size table and a second type buffer size table, and
wherein the first type buffer size table and the second type buffer size table differ from each other in at least one of a maximum value or a minimum value indicating an amount of data in a buffer, or an interval indicating an amount of data corresponding to each index.

8. The method of claim 6, wherein the buffer size table type referred to by the each LCG is determined based on a buffer size of the each LCG.

9. A terminal for providing a buffer status report (BSR), the terminal comprising:
a transceiver; and
at least one processor coupled with the transceiver,
wherein the at least one processor is configured to:
receive, from a base station, a radio resource control (RRC) reconfiguration message comprising information on a buffer size table type that each logical channel group (LCG) can refer to;
identify whether a BSR is triggered;
in response to triggering of the BSR, generate a BSR media access control (MAC) control element (CE), based on the RRC reconfiguration message; and
transmit the BSR MAC CE to the base station,
wherein the BSR MAC CE comprises information indicating the buffer size table type that the each LCG refers to.

10. The terminal of claim 9, wherein the buffer size table type comprises a first type buffer size table and a second type buffer size table, and
wherein the first type buffer size table and the second type buffer size table differ from each other in at least one of a maximum value or a minimum value indicating an amount of data in a buffer, or an interval indicating an amount of data corresponding to each index.

11. The terminal of claim 9, wherein the buffer size table type referred to by the each LCG is determined based on a buffer size of the each LCG.

12. The terminal of claim 9, wherein the at least one processor is configured to:
receive, from the base station, a UECapabilityEnquiry message inquiring of whether the terminal has capability to use the first type buffer size table; and
transmit, to the base station, a UECapabilityInformattion message comprising information on whether the terminal has capability to use the first type buffer size table.

13. The terminal of claim 9, wherein the information indicating the buffer size table type is included in an LCG identification (ID) field or a buffer size table type field in the BSR MAC CE.

14. A base station for acquiring a buffer status report (BSR), the base station comprising:
a transceiver; and
at least one processor coupled with the transceiver,
wherein the at least one processor is configured to:
transmit, to a terminal, a radio resource control (RRC) reconfiguration message comprising information on a buffer size table type that each logical channel group (LCG) can refer to; and
receive, from the terminal, a BSR media access control (MAC) control element (CE) based on the RRC reconfiguration message,
wherein the BSR MAC CE comprises information indicating the buffer size table type that the each LCG refers to.

15. The base station of claim 14, wherein the buffer size table type comprises a first type buffer size table and a second type buffer size table, and
wherein the first type buffer size table and the second type buffer size table differ from each other in at least one of a maximum value or a minimum value indicating an amount of data in a buffer, or an interval indicating an amount of data corresponding to each index.
